# EUROPEAN PATENT SPECIFICATION

(11) **EP 2 412 765 B1**
(45) Date of publication and mention of the grant of the patent: **18.01.2017**
(21) Application number: 11174459.5
(22) Date of filing: 19.07.2011
(51) Int. Cl.: C09D 11/00, C09D 11/101, C09D 11/322

(54) **Inkjet recording method, and printed material**
Tintenstrahlaufzeichnungsverfahren und gedrucktes Material
Procédé d'enregistrement par jet d'encre et matériau imprimé

(30) Priority: 29.07.2010 JP 2010170810; 02.05.2011 JP 2011102972
(43) Date of publication of application: 01.02.2012
(73) Proprietor: FUJIFILM Corporation, Tokyo (JP)
(72) Inventor: Fujii, Yuusuke, Ashigarakami-gun, Kanagawa (JP)
(74) Representative: Höhfeld, Jochen

(56) References cited:
- WO-A1-2009/045703
- WO-A2-2010/150023
- US-A1- 2008 225 099
- US-A1- 2008 316 244

## Description

The present invention relates to an inkjet recording method and a printed material.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low particularly in the case of small lot production. Furthermore, there is little noise and it is excellent as an image recording system, and has thus been attracting attention in recent years.

In particular, an inkjet recording ink composition that is curable upon exposure to radiation such as UV rays (radiation-curing inkjet recording ink composition) is an excellent system from the viewpoint of it being printed on various types of recording media because of the drying properties being excellent compared with a solvent-based ink composition since the majority of the components of the ink composition cure upon exposure to radiation such as UV rays, and because of the image being resistant to spreading.

As a method for irradiating the ink composition with radiation such as UV in such an inkjet recording method, various methods have been proposed so far (JP-A-2010-70754 (JP-A denotes a Japanese unexamined patent application publication) and JP-A-2009-84441). Furthermore, various radiation curing ink compositions have been proposed (JP-A-2010-242037, JP-A-2010-184996, and JP-A-2007-177174).

There is a market demand for a printer having high environmental friendliness. A printer employing a UV curing type ink composition uses as a light source a mercury lamp or a metal halide lamp, but they have the problems that a high power is required, although the productivity is high the power consumption is high, a substrate is deformed by heat, etc. In recent years, a UV-LED, which has a low power and release less heat compared with a mercury lamp or a metal halide lamp, has been put on the market and has been attracting attention.

An ink composition that gives a cured film having excellent flexibility often has low curing sensitivity, and it is necessary to carry out irradiation with UV for a long time.

It has been found that when an ink composition having high curing sensitivity is fixed by irradiation with UV by means of a UV-LED, on the low illumination intensity side (where the maximum illumination intensity is less than 600 mW/cm²) it takes a long time to cure the ink composition, ink composition liquid droplets coalesce together, and the image quality is degraded. Furthermore, it has been found that since it takes a long time to cure the ink composition the productivity is degraded.

Furthermore, it has been found that on the high illumination intensity side (where the maximum illumination intensity exceeds 1,600 mW/cm²), since curing progresses excessively in a short time, the dots are raised, asperities are formed on the image surface, and the image quality is degraded.

It is an object of the present invention to provide an inkjet recording method that can achieve both excellent image quality and high productivity at the same time by the use of an ink composition that has excellent curing sensitivity and discharge stability and gives a cured film having excellent flexibility and adhesion to a recording medium, and a printed material recorded by the inkjet recording method.

The above-mentioned object can be attained by means described in <1> or <11> below. They are described below together with <2> to <10>, which are preferred embodiments.
<1> An inkjet recording method comprising an image formation step of forming an image on a recording medium by discharging an ink composition comprising (Component A) and (Component B)
   (Component A) a polymerizable composition comprising Component A-1 to Component A-3
   (Component A-1) an *N*-vinyllactam,
   (Component A-2) a compound represented by Formula (a-2) 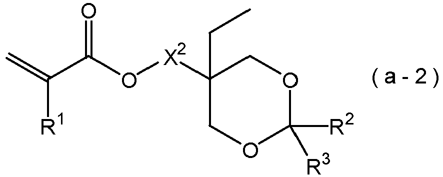 (in Formula (a-2), R¹, R², and R³ independently denote a hydrogen atom, a methyl group, or an ethyl group, and X² denotes a single bond or a divalent linking group),
   (Component A-3) a polyfunctional (meth)acrylate,
      the total content of monofunctional polymerizable compounds comprising Component A-1 and Component A-2 being at least 40 wt% in the ink composition,
   (Component B) a polymerization initiator comprising Component B-1 and Component B-2
   (Component B-1) an acylphosphine compound,
   (Component B-2) a thioxanthone compound and/or a thiochromanone compound,
   {(Component B-1 total weight) ≥ (Component B-2 total weight)} being satisfied, and a curing step of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm²,
<2> the inkjet recording method according to <1>, wherein Component A-1 is a compound represented by Formula (a-1) 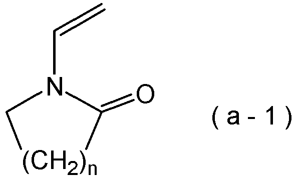 wherein in Formula (a-1), n denotes an integer of 1 to 5,
<3> the inkjet recording method according to <1> or <2>, wherein Component A-1 is *N*-vinylcaprolactam,
<4> the inkjet recording method according to any one of <1> to <3>, wherein the divalent linking group denoted by X² in Formula (a-2) is a divalent hydrocarbon group, poly(alkyleneoxy) group, or poly(alkyleneoxy)alkyl group,
<5> the inkjet recording method according to any one of <1> to <4>, wherein the Component B content is 1 to 20 wt% in the ink composition, Component B-1 being 0.1 to 16 wt% and Component B-2 being 0.1 to 10 wt%,
<6> the inkjet recording method according to any one of <1> to <5>, wherein the relationship {(Component B-1 total weight):(Component B-2 total weight)} = 20:1 to 1:1 is satisfied,
<7> the inkjet recording method according to any one of <1> to <6>, wherein the Component A-3 content is 5 to 59 wt% in the ink composition,
<8> the inkjet recording method according to any one of <1> to <7>, wherein Component B-1 comprises a bisacylphosphine compound and a monoacylphosphine oxide compound,
<9> the inkjet recording method according to any one of <1> to <8>, wherein the ink composition comprises (Component C) a colorant,
<10> the inkjet recording method according to <9>, wherein Component C is a pigment or an oil-based dye, and
<11> a printed material recorded by the inkjet recording method according to any one of <1> to <10>.

In accordance with the present invention, there can be provided an inkjet recording method that can achieve both excellent image quality and high productivity at the same time by the use of an ink composition that has excellent curing sensitivity and discharge stability and gives a cured film having excellent flexibility and adhesion to a recording medium, and a printed material recorded by the inkjet recording method.

The inkjet recording method of the present invention comprises an image formation step of forming an image on a recording medium by discharging an ink composition comprising (Component A) and (Component B), and a curing step of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm².
(Component A) a polymerizable composition comprising Component A-1 to Component A-3
(Component A-1) an *N*-vinyllactam,
(Component A-2) a compound represented by Formula (a-2) 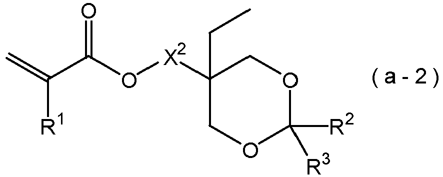 (In Formula (a-2), R¹, R², and R³ independently denote a hydrogen atom, a methyl group, or an ethyl group, and X² denotes a single bond or a divalent linking group.),
(Component A-3) a polyfunctional (meth)acrylate,
   the total content of monofunctional polymerizable compounds comprising Component A-1 and Component A-2 being at least 40 wt% in the ink composition,
(Component B) a polymerization initiator comprising Component B-1 and Component B-2
(Component B-1) an acylphosphine compound,
(Component B-2) a thioxanthone compound and/or a thiochromanone compound,
{(Component B-1 total weight) ≥ (Component B-2 total weight)} being satisfied.

In the specification, the notation 'X to Y', which expresses a numeral range, has the same meaning as 'at least X but no greater than Y'. Furthermore, '(Component A-1) an *N*-vinyllactam', etc. that are described above are also simply called 'Component A-1', etc. Moreover, when referring to either or both of 'acrylate' and 'methacrylate', '(meth)acrylate' is also used. The present invention is explained in detail below.

### I. Ink composition

At first the ink composition used in the present invention (hereinafter, also called 'the ink composition of the present invention') comprising Component A and Component B is described in detail below. The ink composition of the present invention is an ink composition that can cure upon exposure to an actinic radiation and is also an oil-based ink composition. The 'actinic radiation' is a radiation that can provide energy that enables an initiating species to be generated in the ink composition when irradiated, and broadly includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are particularly preferable.

In particular, using a light-emitting diode that emits UV having an emission peak wavelength in the range of 300 to 400 nm, the ink composition of the present invention cures with high sensitivity toward UV with a maximum illumination intensity of 600 to 1,600 mW/cm² on a recording medium surface onto which the ink composition has been discharged.

Furthermore, since the ink composition of the present invention is a radiation curable type ink composition and cured after being applied onto a recording medium, it is preferable that it does not contain volatile solvent and is solvent-free. This is because, if volatile solvent remains in a cured ink image, the solvent resistance is degraded, and the VOC (Volatile Organic Compound) problem based on volatile solvent occurs.

### (Component A) Polymerizable composition comprising Component A-1 to Component A-3

The ink composition of the present invention comprises (Component A) a polymerizable composition comprising Component A-1 to Component A-3. Component A-1 to Component A-3 are explained below.

### (Component A-1) N-vinyllactam

The ink composition of the present invention comprises an N-vinyllactam. As the *N*-vinyllactam, a compound represented by Formula (a-1) is preferable.

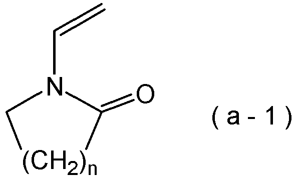

In Formula (a-1), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is *N*-vinylcaprolactam. *N*-vinylcaprolactam is preferable since it has excellent safety, is commonly used and easily available at a relatively low price, and gives particularly good ink curability and adhesion of a cured film to a recording medium.

The content of Component A-1 in the ink composition of the present invention is preferably 5 to 60 wt% relative to the weight of the entire ink composition, more preferably 15 to 35 wt%. When the content is 5 wt% or greater the adhesion to a recording medium is excellent, and when the content is no greater than 60 wt % the storage stability is excellent.

### (Component A-2) Compound represented by Formula (a-2)

The ink composition of the present invention comprises (Component A-2) a compound represented by Formula (a-2). When it does not comprise Component A-2, adhesion between a recording medium (in particular polyvinyl chloride, polyethylene terephthalate (PET), and an acrylic resin) and an image is degraded. 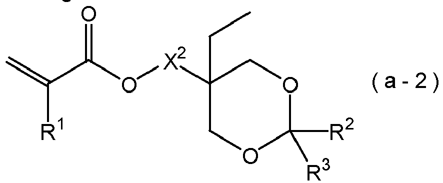 (In formula (a-2), R¹, R² and R³ independently denote a hydrogen atom, a methyl group, or an ethyl group, and X² denotes a single bond or a divalent linking group.)

R¹ is preferably a hydrogen atom or a methyl group, and more preferably a hydrogen atom.

R² and R³ are independently preferably a hydrogen atom or a methyl group, and more preferably a hydrogen atom, and it is yet more preferable that both R² and R³ are hydrogen atoms.

The divalent linking group denoted by X² is not particularly limited as long as the effects of the invention are not greatly impaired, and is preferably a divalent hydrocarbon group or a divalent group in which a hydrocarbon group and an ether bond are combined, and more preferably a divalent hydrocarbon group, poly(alkyleneoxy) group, or poly(alkyleneoxy)alkyl group. Furthermore, the number of carbons of the divalent linking group is preferably 1 to 60, and more preferably 1 to 20.

X² is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific examples of Component A-2 are cited below, but it is not limited to these compounds. In the specific examples below, R denotes a hydrogen atom or a methyl group.

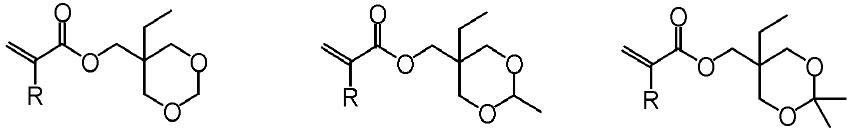

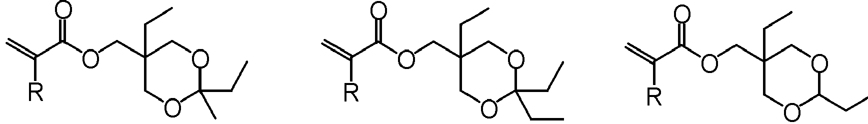

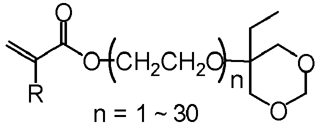

Among them, cyclic trimethylolpropane formal (meth)acrylate is preferable, and cyclic trimethylolpropane formal acrylate is particularly preferable. Component A-2 may be a commercial product, and specific examples of the commercial product include SR531 (SARTOMER).

From the viewpoint of curability of the ink composition and adhesion between a recording medium and an image, the content of Component A-2 is preferably 1 to 65 wt% relative to the entire weight of the ink composition, more preferably 3 to 60 wt%, and yet more preferably 5 to 60 wt%, particularly preferably 5 to 50 wt%, and most preferably 5 to 40 wt%.

### Other monofunctional (meth)acrylate

The ink composition of the present invention may comprise another monofunctional (meth)acrylate other than Component A-2.

Preferred examples of the other monofunctional (meth)acrylate include (Component A-4) an aromatic hydrocarbon group-containing monofunctional (meth)acrylate.

### (Component A-4) Aromatic hydrocarbon group-containing monofunctional (meth)acrylate

The ink composition of the present invention preferably comprises (Component A-4) an aromatic hydrocarbon group-containing monofunctional (meth)acrylate. Component A-4 is preferably a compound having a molecular weight of no greater than 500, and more preferably no greater than 300.

Examples of Component A-4 include an aromatic monofunctional radically polymerizable monomer described in paragraphs 0048 to 0063 of JP-A-2009-096985. In the present invention, the aromatic hydrocarbon group-containing monofunctional (meth)acrylate is preferably a compound represented by Formula (a-4). 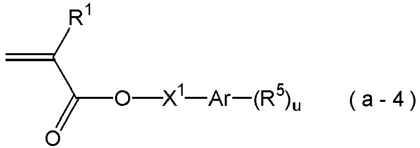 (In Formula (a-4), R¹ denotes a hydrogen atom or a methyl group, X¹ denotes a divalent linking group, Ar denotes an aromatic hydrocarbon group, R⁵ denotes a substituent, u denotes an integer of 0 to 5, and the u R⁵s may be identical to or different from each other.)

In Formula (a-4), R¹ is preferably a hydrogen atom.

X¹ denotes a divalent linking group, and preferably an ether bond (-O-), an ester bond (-C(O)O- or -OC(O)-), an amide bond (-C(O)NR'- or -NR'C(O)-), a carbonyl group (-C(O)-), an imono group (-NR'-), an optionally substituted alkylene group having 1 to 15 carbons, or a divalent group in which two or more thereof are combined. R' denotes a hydrogen atom, a straight-chain, branched, or cyclic alkyl group having 1 to 20 carbons, or an aryl group having 6 to 20 carbons. Examples of the substituent include a hydroxy group and a halogen atom.

The moiety containing R¹ and X¹ (H₂C=C(R¹)-C(O)O-X¹-) may be bonded to any position of the aromatic hydrocarbon group. From the viewpoint of improving affinity with a colorant, the end of X¹ bonded to the aromatic hydrocarbon structure in Formula (a-4) is preferably an oxygen atom, and more preferably an ethereal oxygen atom. X¹ in Formula (a-4) is preferably *-(LO)_{q}-. Here, * denotes the position at which X¹ and the carbonic ester bond in Formula (a-4) are bonded, q is an integer of 0 to 10, and L denotes an alkylene group having 2 to 4 carbons. q is preferably an integer of 0 to 4, more preferably an integer of 0 to 2, and yet more preferably 1 or 2. (LO)q is preferably an ethylene oxide chain or a propylene oxide chain.

Ar denotes an aromatic hydrocarbon group. Examples of the aromatic hydrocarbon group include a monocyclic aromatic hydrocarbon group having 1 ring and a polycyclic aromatic hydrocarbon group having 2 to 4 rings. Specific examples thereof include a group in which at least one hydrogen atom is removed from benzene, naphthalene, anthracene, 1*H*-indene, 9*H*-fluorene, 1*H-*phenalene, phenanthrene, triphenylene, pyrene, naphthacene, tetraphenylene, biphenylene, as-indacene, s-indacene, acenaphthylene, fluoranthene, acephenanthrylene, aceanthrylene, chrysene, or pleiadene etc.

Among them, in the present invention, a phenyl group and a naphthyl group are preferable, and a monocyclic aromatic hydrocarbon group, that is a phenyl group, is more preferable.

It is preferable that the u R⁵s independently represent a halogen atom, a carboxy group, an acyl group having 1 to 10 carbons, a hydroxy group, a substituted or unsubstituted amino group, a thiol group, a siloxane group, or an optionally substituted hydrocarbon group, alkoxy group or heterocyclic group having a total number of carbons of no greater than 30. The substituents include a hydroxy group, an alkyl group having 1 to 10 carbons, and an aryl group having 6 to 12 carbons.

u denotes an integer of 0 to 5, and is preferably 0.

Specific preferred examples of Component A-4 include [L-1] to [L-65], but are not limited to those below. In some of the compounds in the present specification, a hydrocarbon chain is given as a simplified structural formula in which symbols for carbon (C) and hydrogen (H) are omitted. Furthermore, Me denotes a methyl group.

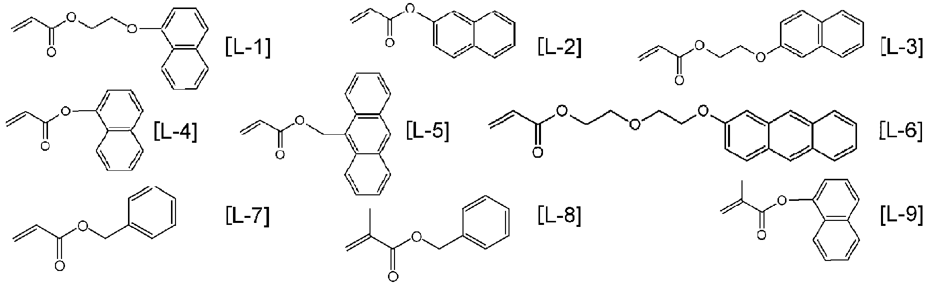

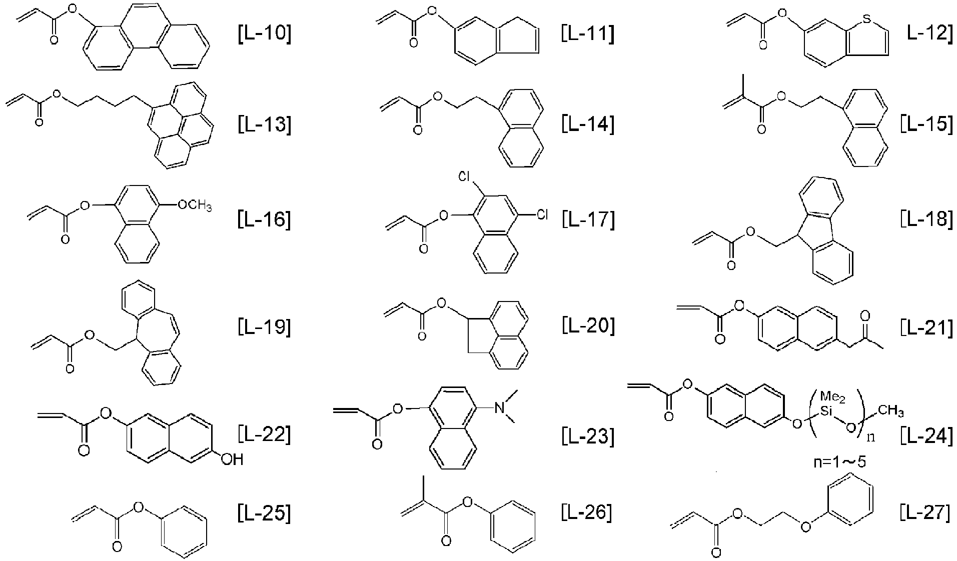

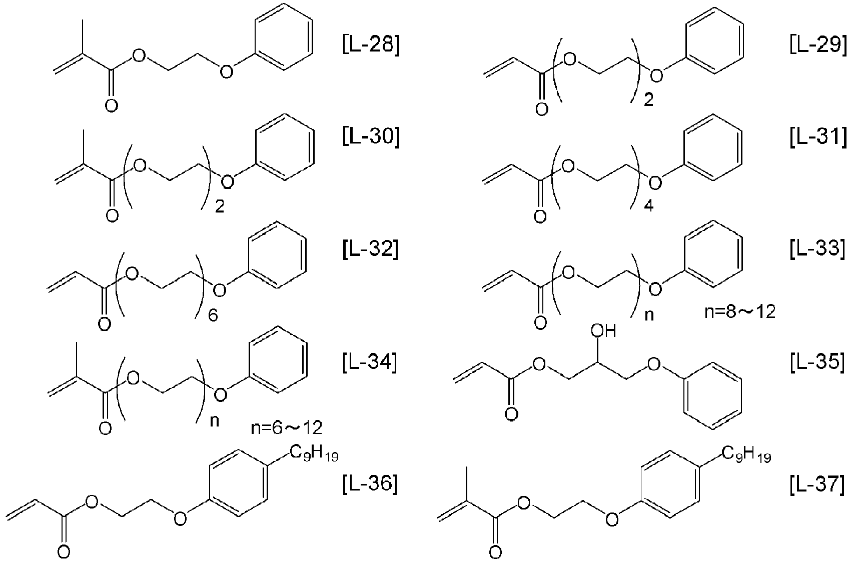

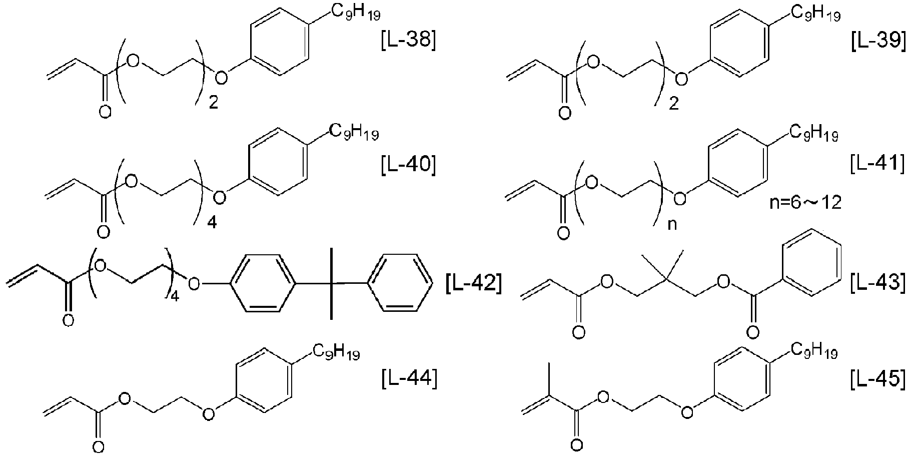

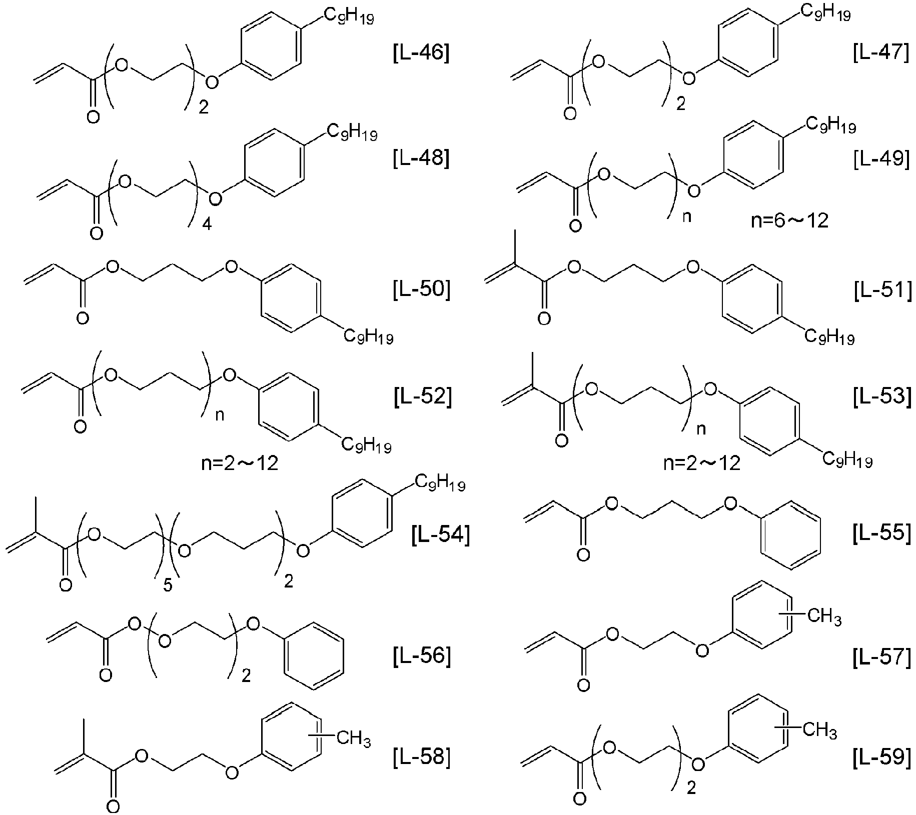

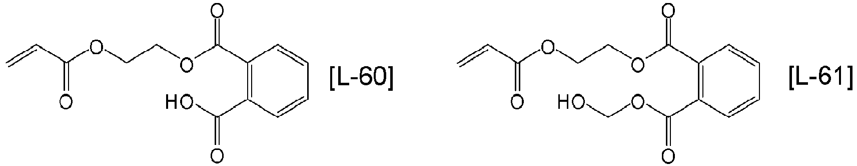

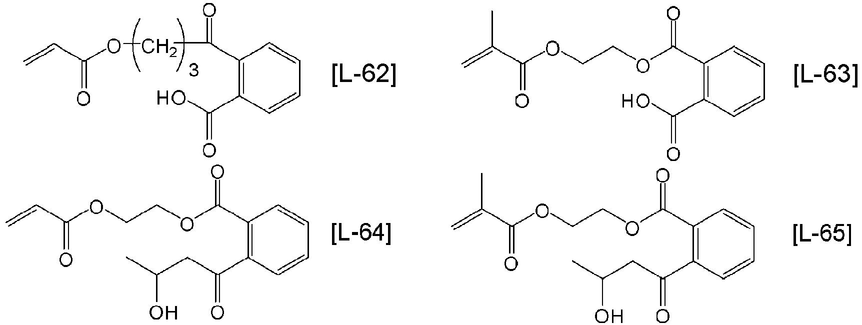

In the present invention, a compound represented by Formula (a-4) is preferably a compound having a phenyl group, more preferably 2-phenoxyethyl (meth)acrylate or benzyl (meth)acrylate, yet more preferably 2-phenoxyethyl (meth)acrylate, and particularly preferably 2-phenoxyethyl acrylate.

From the viewpoint of inkjet discharge properties and flexibility, the content of Component A-4 is preferably 1 to 50 wt% relative to the total weight of the ink composition, more preferably 3 to 45 wt%, and yet more preferably 5 to 40 wt%.

The ink composition of the present invention may comprise other monofunctional (meth)acrylate compound other than Component A-2 and Component A-4. Specific examples of the monofunctional (meth)acrylate compound other than Component A-2 and Component A-4 include isoamyl (meth)acrylate, stearyl (meth)acrylate, lauryl (meth)acrylate, octyl (meth)acrylate, isooctyl (meth)acrylate, decyl (meth)acrylate, isomyristyl (meth)acrylate, isostearyl (meth)acrylate, 2-ethylhexyl diglycol (meth)acrylate, 2-hydroxybutyl (meth)acrylate, buthoxyethyl (meth)acrylate, methoxydiethylene glycol (meth)acrylate, methoxypolyethylene glycol (meth)acrylate, methoxypropylene glycol (meth)acrylate, tetrahydrofurfuryl (meth)acrylate, isobornyl (meth)acrylate, 2-hydroxyethyl (meth)acrylate, 2-hydroxypropyl (meth)acrylate, 2-(meth)acryloyloxyethylsuccinic acid, 2-(meth)acryloyloxyethyl-2-hydroxyethylphthalic acid, a lactone-modified flexible (meth)acrylate, *t*-butylcyclohexyl (meth)acrylate, 2-(2-ethoxyethoxy)ethyl (meth)acrylate, cyclopentenyl (meth)acrylate, cyclopentenyloxyethyl (meth)acrylate, and dicyclopentanyl (meth)acrylate etc.

In the present invention, the total content of monofunctional polymerizable compounds comprising Component A-1 and Component A-2 is at least 40 wt% in the ink composition. The monofunctional polymerizable compounds include monofunctional polymerizable compounds such as Component A-4 and the other monofunctional (meth)acrylate.

When the content of the monofunctional polymerizable compounds is less than 40 wt%, the flexibility is degraded.

From the viewpoint of flexibility, the content of the monofunctional polymerizable compounds is preferably 45 to 80 wt%, and more preferably 50 to 70 wt%.

### (Component A-3) Polyfunctional (meth)acrylate

The ink composition of the present invention comprises (Component A-3) a polyfunctional (meth)acrylate.

When the ink composition does not comprise the polyfunctional (meth)acrylate, curability is degraded.

Specific examples of Component A-3 include bis(4-(meth)acryloxypolyethoxyphenyl)propane, neopentyl glycol di(meth)acrylate, ethoxylated (2) neopentyl glycol di(meth)acrylate (compound formed by di(meth)acrylating neopentyl glycol ethylene oxide 2 mol adduct), propoxylated (2) neopentyl glycol di(meth)acrylate (compound formed by di(meth)acrylating neopentyl glycol propylene oxide 2 mol adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, and caprolactone-modified dipentaerythritol hexa(meth)acrylate.

The ink composition of the present invention preferably comprises an oligomer as the polyfunctional (meth)acrylate compound.

The 'oligomer' means a polymer having a limited number (preferably 5 to 100) of monomer-based constituent units. A weight-average molecular weight of the oligomer is preferably 400 to 10,000, and more preferably 500 to 5,000.

The oligomer is preferably a compound having a (meth)acryloyl group as a functional group.

From the viewpoint of a balance between flexibility and curability, it is preferable for the number of the functional group contained in the oligomer to be 1 to 15 per oligomer molecule, more preferably 2 to 6, yet more preferably 2 to 4, and particularly preferably 2.

Examples of the oligomer in the present invention include a polyester (meth)acrylate-based oligomer, an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, a (meth)acrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester (meth)acrylate, a polyamide oligomer, a polyisocyanate oligomer), an addition-condensation oligomer (a phenolic resin, an amino resin, a xylene resin, a ketone resin, etc.), and amine-modified polyester oligomer etc. Among these an oligoester (meth)acrylate is preferable, and among them a urethane (meth)acrylate and a polyester (meth)acrylate are more preferable, and a urethane (meth)acrylate is particularly preferable because the ink composition provides excellent curability and adhesion. With regard to the oligomer, one type thereof may be used on its own or two or more types may be used in combination.

As the urethane (meth)acrylate, an aliphatic urethane (meth)acrylate and an aromatic urethane (meth)acrylate may preferably be cited. With respect to the oligomer, 'Origomar Handobukku (Oligomer Handbook)' (edited by Junji Furukawa, The Chemical Daily Co., Ltd.) may also be referred to.

Examples of the urethane (meth)acrylate-based olygomer include U-2PPA, U-4HA, U-6HA, U-6LPA, U-15HA, U-324A, UA-122P, UA5201, or UA-512, etc. manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, CN9893 manufactured by Sartomer; EB204, EB230, EB244, EB245, EB270, EB284, EB285, EB810, EB4830, EB4835, EB4858, EB1290, EB210, EB215, EB4827, EB4830, EB4849, EB6700, EB8402, EB8804, EB8800-20R, etc. manufactured by DAICEL-CYTEC COMPANY LTD.

Examples of the amine-modified polyester oligomer include EB524, EB80, EB81 manufactured by DAICEL-CYTEC COMPANY LTD.; CN550, CN501, CN551 manufactured by Sartomer; GENOMER5275 manufactured by RAHN AG.

From the viewpoint of a balance between curability and adhesion, the content of the oligomer is preferably 1 to 10 wt% relative to the total weight of the ink composition, more preferably 2 to 8 wt%, and yet more preferably 3 to 7 wt%.

The total content of (Component A-3) the polyfunctional (meth)acrylate is, from the viewpoint of curability, preferably 5 to 60 wt% relative to the total weight of the ink composition, more preferably 5 to 35 wt%, yet more preferably 7 to 30 wt%, and particularly preferably 10 to 25 wt%.

The total content of polymerizable compounds in the ink composition is preferably 65 to 99 wt%, and more preferably 70 to 90 wt%.

### (Component B) Polymerization initiator comprising Component B-1 and Component B-2

The ink composition of the present invention comprises a polymerization initiator comprising (Component B-1) an acylphosphine compound and (Component B-2) a thioxanthone compound and/or a thiochromanone compound, {(Component B-1 total weight) ≥ (Component B-2 total weight)} being satisfied.

### (Component B-1) Acylphosphine compound

The ink composition of the present invention comprises (Component B-1) an acylphosphine compound as (Component B) a polymerization initiator. When the ink composition does not comprise Component B-1, excellent curability cannot be obtained.

Preferred examples of (Component B-1) the acylphosphine compound include acylphosphine oxide compounds described in paragraphs 0080 to 0098 of JP-A-2009-096985, and among them a compound having a structure represented by Formula (b-1-1) or (b-1-2) in the molecular structure is more preferable. 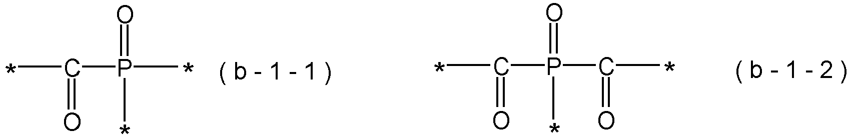 (In Formulae (b-1-1) and (b-1-2), * denotes a bonding position.)

The acylphosphine oxide compound is particularly preferably a compound having a chemical structure represented by Formula (b-1-3) or (b-1-4). 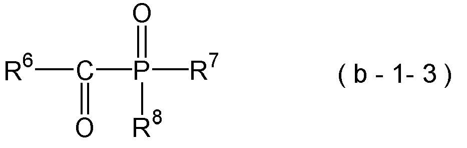 (In Formula (b-1-3), R⁶, R⁷, and R⁸ independently denote an aromatic hydrocarbon group, which may have a methyl group or an ethyl group as a substituent.)

With regard to a monoacylphosphine oxide compound represented by Formula (b-1-3), it is preferable that R⁶ to R⁸ are phenyl groups, which may have a methyl group as a substituent, and it is more preferable that R⁷ and R⁸ are phenyl groups and R⁶ is a phenyl group having 1 to 3 methyl groups.

Among them, as the monoacylphosphine oxide compound represented by Formula (b-1-3), 2,4,6-trimethylbenzoyldiphenylphosphine oxide (Darocur TPO manufactured by Ciba Specialty Chemicals, Lucirin TPO manufactured by BASF) is preferable. 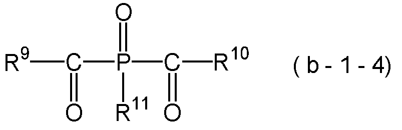 (In Formula (b-1-4), R⁹, R¹⁰ and R¹¹ independently denote an aromatic hydrocarbon group, which may have a methyl group or an ethyl group as a substituent.)

With regard to a bisacylphosphine oxide compound represented by Formula (b-1-4), it is preferable that R⁹ to R¹¹ are phenyl groups, which may have a methyl group as a substituent, and it is more preferable that R¹¹ is a phenyl group and R⁹ and R¹⁰ are phenyl groups having 1 to 3 methyl groups.

Among them, as the bisacylphosphine oxide compound represented by Formula (b-1-4), bis(2,4,6-trimethylbenzoyl)phenylphosphine oxide (IRGACURE 819, manufactured by Ciba Specialty Chemicals) is preferable.

From the viewpoint of curability, the content of (Component B-1) the acylphosphine compound of the ink composition is preferably 0.1 to 16 wt%, more preferably 1 to 16 wt%, yet more preferably 4 to 13 wt%.

Furthermore, it is preferable that a bisacylphosphine compound and a monoacylphosphine compound are used in combination as Component B-1, and when a bisacylphosphine compound and a monoacylphosphine compound are contained, it is preferable that {(bisacylphosphine compound content):(monoacylphosphine compound content) = 20:1 to 1:20}, more preferably 12:1 to 1:10, and yet more preferably 10:1 to 1:3. When the ratio of the bisacylphosphine compound and monoacylphosphine compound contents is in the above-mentioned range, the curability is excellent.

### (Component B-2) Thioxanthone compound and/or thiochromanone compound

The ink composition of the present invention comprises (Component B-2) a thioxanthone compound and/or a thiochromanone compound. When the ink composition does not comprise Component B-2, the curability is poor.

### Thioxanthone compound

The thioxanthone compound is preferably a compound represented by Formula (b-2-1). 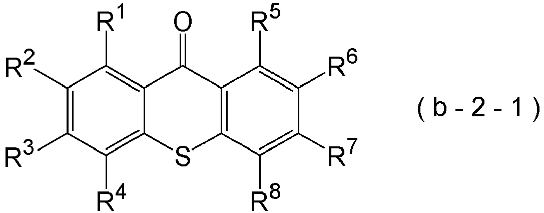 (In Formula (b-2-1), R¹ to R⁸ independently denote a hydrogen atom, an alkyl group, a halogen atom, a hydroxy group, a cyano group, a nitro group, an amino group, an alkylthio group, an alkylamino group (including monosubstituted and disubstituted cases), an alkoxy group, an alkoxycarbonyl group, an acyloxy group, an acyl group, a carboxy group, or a sulfo group.)

The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R¹ to R⁸ that are adjacent may be bonded to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a condensed ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *n*-allylthioxanthone-3,4-dicarboxyimide, *n*-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9*H*-thioxanthon-2-yloxy)-*N,N,N*-trimethyl-1-propanaminium chloride.

Among them, from the viewpoint of ready availability and curability, 2,4-diethylthioxanthone, 2-isopropylthioxanthone, and 4-isopropylthioxanthone are more preferable.

### Thiochromanone compound

The thiochromanone compound is preferably a compound represented by Formula (b-2-2).

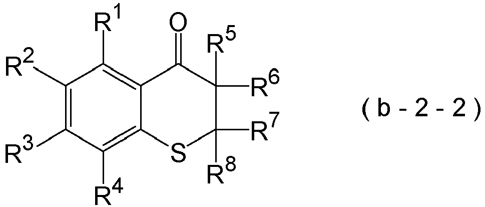

In Formula (b-2-2), R¹, R², R³, R⁴, R⁵, R⁶, R⁷, and R⁸ independently denote a hydrogen atom, an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group. The number of carbons of an alkyl moiety of the alkyl group, alkylthio group, alkylamino group, alkoxy group, alkoxycarbonyl group, acyloxy group, and acyl group is preferably 1 to 20, more preferably 1 to 8, and yet more preferably 1 to 4. The acyloxy group may be an aryloxy carbonyl group and the acyl group may be an arylcarbonyl group. In this case, the number of carbon atoms of an aryl moiety is preferably 6 to 14, and more preferably 6 to 10.

Two of R¹, R², R³, and R⁴ that are adjacent may be bonded to each other, for example condensed, to form a ring.

Examples of the ring structure when those above form a ring include a 5 or 6-membered aliphatic ring or aromatic ring; it may be a heterocyclic ring containing an element other than a carbon atom, and rings thus formed may be further combined to form a bicyclic ring, for example a condensed ring. These ring structures may further have a substituent. Examples of the substituent include those described for Formula (b-2-1). Examples of a heteroatom when the resulting ring structure is a heterocyclic ring include N, O, and S.

Furthermore, the thiochromanone compound is preferably a compound having on the thiochromanone ring structure at least one substituent (an alkyl group, a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, or a sulfo group, etc.). As examples of the substituent above, an alkyl group, a halogen atom, a hydroxy group, an alkylthio group, an alkylamino group, an alkoxy group and an acyloxy group are preferable, an alkyl group having 1 to 20 carbons and a halogen atom are more preferable, and an alkyl group having 1 to 4 carbons and a halogen atom are yet more preferable.

Furthermore, the thiochromanone compound is more preferably a compound having at least one substituent on an aromatic ring and at least one substituent on a thiocyclohexanone ring.

The specific examples of the thiochromanone compound preferably include (I-1) to (I-31) listed below. Among them, (I-14), (I-17) and (I-19) are more preferable, and (I-14) is particularly preferable.

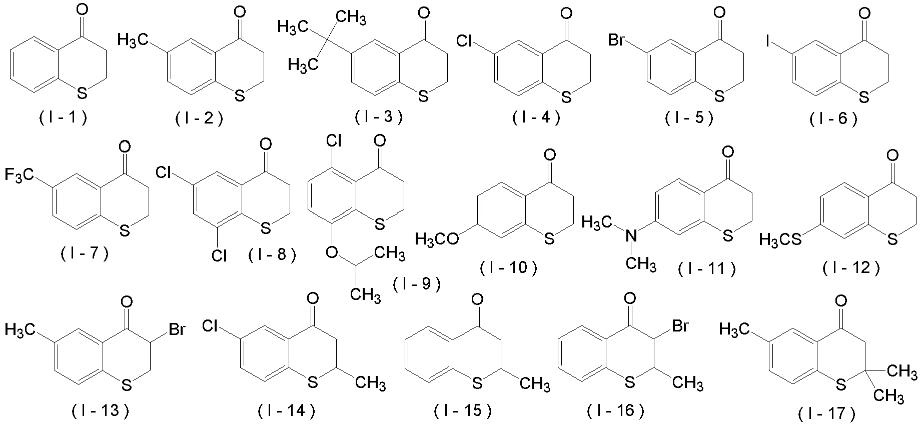

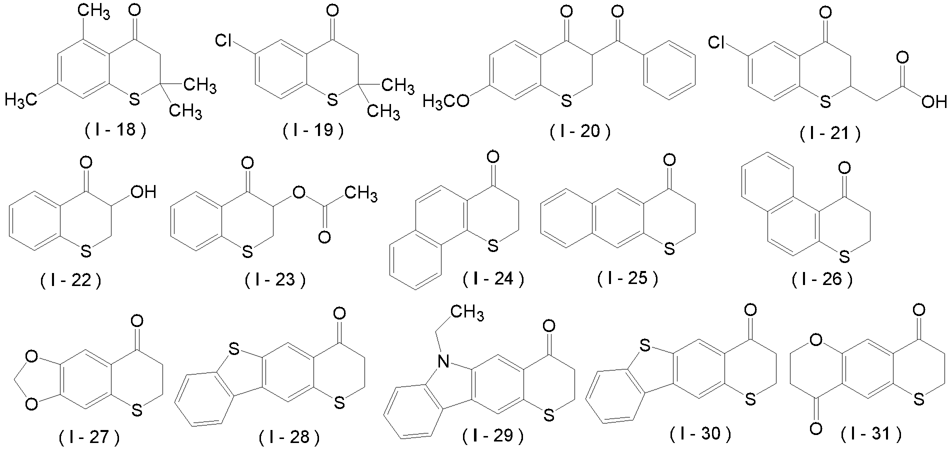

The total content of (Component B-2) the thioxanthone compound and the thiochromanone compound in the ink composition of the present invention is preferably in the range of 0.1 to 10 wt% relative to the ink composition, more preferably 0.5 to 10 wt%, yet more preferably 1 to 8 wt%.

### Other polymerization initiator

The ink composition of the present invention may comprise other polymerization initiator other than Component B-1 and Component B-2. As the other polymerization initiator, (Component B-3) an α-aminoalkylphenone compound is preferable.

### (Component B-3) α-Aminoalkylphenone compound

The ink composition of the present invention preferably comprises (Component B-3) an α-aminoalkylphenone compound. By comprising Component B-3, an ink composition having excellent curability can be obtained. Component B-3 is preferably a compound represented by Formula (b-3-1).

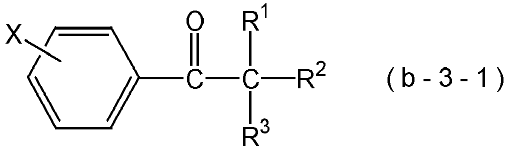

In Formula (b-3-1), R¹, R², and R³ independently denote a hydroxy group, an optionally substituted alkyl group, an optionally substituted alkoxy group, or an optionally substituted amino group, and X denotes a hydrogen atom, an optionally substituted amino group, an optionally substituted alkylthio group, or an optionally substituted alkyl group. At least one of R¹ to R³ is an optionally substituted amino group. When R¹, R², R³, or X is an amino group, the substituents may be bonded to each other to form a heterocyclic group. Examples of the substituent include an alkyl group having 1 to 10 carbons.

As Component B-3, a compound represented by Formula (b-3-2) or (b-3-3) is preferable.

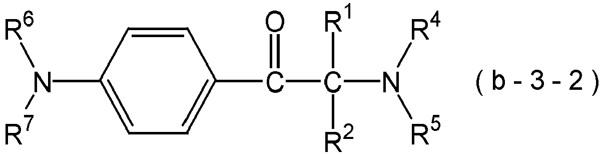

In Formula (b-3-2), R⁴, R⁵, R⁶, and R⁷ independently denote an optionally substituted alkyl group, and at least one of R⁴ and R⁵, and R⁶ and R⁷ may be bonded to each other to form a heterocyclic group. R¹, R², and the substituent have the same meanings as those for Formula (b-3-1).

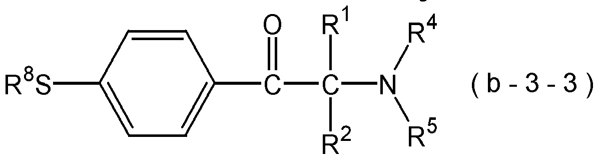

In Formula (b-3-3), R⁸ denotes an optionally substituted alkyl group.

R¹, R² and the susbstituent have the same meaning as R¹, R² and the susbstituent in Formula (b-3-1), and R⁴ and R⁵ have the same meaning as R⁴ and R⁵ in Formula (b-3-2).

The heterocyclic group is not particularly limited and may be selected appropriately. For example, a morpholino group is preferable.

Preferred examples of the α-aminoalkylphenone compound include a commercial product such as IRGACURE 369 and IRGACURE 907 manufactured by Ciba Japan.

From the viewpoint of curability, the content of (Component B-3) the α-aminoalkylphenone compound is preferably 0.1 to 15 wt% relative to the ink composition, more preferably 0.5 to 10 wt%, and yet more preferably 1 to 5 wt%.

Examples of the other polymerization initiator include an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond. Details of the above-mentioned polymerization initiators are known to a person skilled in the art, and are described in for example paragraphs 0090 to 0116 of JP-A-2009-185186.

The total content of the polymerization initiator in the ink composition is preferably in the range of 1 to 20 wt%, more preferably 3 to 18 wt%, yet more preferably 5 to 15wt%.

When in the above-mentioned range, the ink composition can be sufficiently cured, and a cured film for which the degree of curing is uniform can be obtained.

Here, Component (B-1) and Component (B-2) satisfy {(Component B-1 total weight) ≥ (Component B-2 total weight)}. When the above-mentioned relationship is not satisfied, the curability is poor.

In the present invention, from the viewpoint of curability, {(Component B-1 total weight):(Component B-2 total weight)} is preferably 20:1 to 1:1, more preferably 10:1 to 1.1:1, and yet more preferably 8:1 to 1.2:1.

When Component B-3 is contained as the polymerization initiator, Component B-1 to Component B-3 satisfy the relationship {(Component B-1 and Component B-3 total weight) ≥ (Component B-2 total weight)}. In the present invention, from the viewpoint of curability, {(Component B-1 and Component B-3 total weight):(Component B-2 total weight)} is preferably 20:1 to 1:1, more preferably 20:1 to 1.5:1, and yet more preferably 15:1 to 1.5:1.

### (Component C) Colorant

In the present invention, the ink composition may preferably contain (Component C) a colorant in order to improve the visibility of a formed image area. The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36; as a blue or cyan pigment, Pigment Blue 1, 15, 15:1, 15:2, 15:3, 15:4, 15:6, 16, 17-1, 22, 27, 28, 29, 36, or 60; as a green pigment, Pigment Green 7, 26, 36, or 50; as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment, Pigment Black 7, 28, or 26; as a white pigment, Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

The colorant is preferably added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

In the preparation of the ink composition, the colorant may be added directly to the ink composition together with other components. Furthermore, in order to improve dispersibility it may be added in advance to a solvent or a dispersing medium such as a polymerizable compound used in the present invention, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add in advance the colorant to the dispersing medium such as the polymerizable compound. As a polymerizable compound used as the dispersing medium of the colorant, it is preferable in terms of dispersion suitability to select a monomer having a low viscosity. The colorants may be used by appropriately selecting one type or two or more types thereof according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. It is preferable for the colorant to control its particle size, since clogging of a head nozzle can be suppressed and the storage stability, transparency, and curing sensitivity of the ink composition can be maintained.

The content of the colorant in the ink composition is appropriately selected according to the color and the intended purpose, and is preferably 0.01 to 30 wt% relative to the weight of the entire ink composition.

### Other components

The ink composition of the present invention may comprise as necessary, in addition to the above-mentioned components, a polymerization inhibitor, a sensitizer, a co-sensitizer, a UV absorber, an antioxidant, an antifading agent, a conductive salt, a solvent, a polymer compound, a basic compound, a surfactant, a leveling additive, a matting agent and, for adjusting film physical properties, a polyester resin, polyurethane resin, vinyl resin, acrylic resin, rubber resin, or wax, etc. They are described in JP-A-2009-185186 and may be used in the present invention as well.

### (Component D) Polymerization inhibitor

The ink composition of the present invention preferably comprises (Component D) a polymerization inhibitor from the viewpoint of improving the storage stability.

When the ink composition is used as an inkjet recording ink composition, it is preferably heated in the range of 25°C to 80°C to thus make it less viscous and then discharged, and in order to prevent clogging of a head due to thermal polymerization it is preferable to add a polymerization inhibitor.

Examples of the polymerization inhibitor include a nitroso-based polymerization inhibitor, a hydroquinone, a benzoquinone, p-methoxyphenol, TEMPO, TEMPOL, Al cupferron, and a hindered amine. Among them, a nitroso-based polymerization inhibitor and a hindered amine-based polymerization inhibitor are preferable.

Specific examples of the nitroso-based polymerization inhibitor preferably used in the present invention are shown below, but not limited thereto.

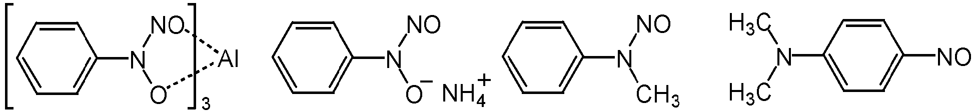

Examples of the nitroso-based polymerization inhibitor include a commercial product such as FIRSTCURE ST-1 manufactured by Chem First. Examples of the hindered amine-based polymerization inhibitor include a commercial product such as TINUVIN292, TINUVIN770DF, TINUVIN765, or TINUVIN123.

The content of the polymerization inhibitor in the ink composition of the present invention is preferably in the range of 0.01 to 1.5 wt% relative to the ink composition, more preferably 0.1 to 1.0 wt%, yet more preferably 0.2 to 0.8 wt%. When in the numerical range above, it is possible to suppress polymerization during storage and preparation of the ink composition and prevent clogging of an inkjet head nozzle.

The ink composition of the present invention preferably comprises a dispersant. Especially, when the pigment is used, the ink composition preferably comprises a dispersant in order to stably disperse the pigment in the ink composition. As the dispersant, a polymeric dispersant is preferable. The 'polymeric dispersant' referred to in the present invention means a dispersant having a weight-average molecular weight of 1,000 or greater.

The content of the dispersant in the ink composition is appropriately selected according to the intended purpose, and is preferably 0.05 to 15 wt% relative to the weight of the entire ink composition.

### Properties of ink composition

While taking into consideration dischargeability, the ink composition of the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The surface tension at 25°C of the ink composition of the present invention is preferably 28 to 39 mN/m, and more preferably 35 to 38 mN/m. When in the above-mentioned range, excellent surface gloss can be obtained.

### II. Inkjet recording method

The inkjet recording method of the present invention comprises (a) an image formation step of forming an image on a recording medium by discharging an ink composition comprising (Component A) and (Component B), and (b) a curing step of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm². The inkjet recording method of the present invention is a method in which, by comprising steps (a) and (b), an image is formed by means of an ink composition cured on a recording medium.

### Step (a): Image formation step

The image formation step of forming an image on a recording medium by discharging an ink composition comprising Component A and Component B is first explained.

The recording medium used in the present invention is not particularly limited, and a known recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium is preferable and among them a plastic film and a paper are more preferable.

An inkjet recording device used in the image formation step is not particularly limited, and any known inkjet recording device that can achieve an intended resolution may be used. That is, any known inkjet recording device, such as a commercial product, may be used in order to discharge an ink composition onto a recording medium in step (a) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 300 x 300 to 4,000 x 4,000dpi, more preferably 400 x 400 to 1,600 x 1,600dpi. Here, dpi referred to in the present invention means the number of dots per 2.54 cm.

An inkjet head used in the inkjet recording method of the present invention is preferably an inkjet head having a non-liquid repellent-treated nozzle plate. As a nozzle plate, a known nozzle plate may be used and, for example, inkjet heads described in US Pat. No. 7,011,396 or US Pat. Application No. 2009/0290000 may preferably be used. Such a nozzle plate is mounted in, for example, a piezo drive system on-demand inkjet head manufactured by FUJIFILM Dimatix, Inc. Specific examples thereof include the S-class and Q-class Sapphire.

The nozzle plate is preferably one in which at least part of a face on the side opposing a recording medium is treated so as to be non-liquid repellent (ink affinity treatment). As a non-liquid repellent treatment method, a known method may be used and examples thereof include, but are not limited to, (1) a method in which a silicon oxide film is formed by thermally oxidizing the surface of a nozzle plate made of silicon, (2) a method in which an oxide film of silicon or a material other than silicon is oxidatively formed or a method in which it is formed by sputtering, and (3) a method in which a metal film is formed. Details of these methods may be referred to in US Pat. Application No. 2010/0141709.

The inkjet head preferably has a productivity of at least 200 ng*kHz.

The productivity is calculated from weight per dot of ink composition x number of nozzles × frequency, and means the weight of an ink composition discharged per second.

Since the ink composition of the present invention has high curing sensitivity and can be cured in a short period of time, even when an image formation apparatus having a productivity of at least 200 ng*kHz is used, an image can be formed without degrading image quality. The productivity is more preferably 200 to 800 ng*kHz, and yet more preferably 300 to 600 ng*kHz.

In the present invention, since it is preferable for the ink composition to be discharged at a constant temperature, a preferably used image forming equipment has a section from the ink composition supply tank to the inkjet head can be thermally insulated and heated. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

A radiation curing type ink composition such as the ink composition of the present invention generally has higher viscosity than that of a water-based ink composition used for a general inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the ink composition temperature is preferably ±5°C of a set temperature, more preferably ±2°C of the set temperature, and yet more preferably ±1°C of the set temperature.

### Step (b): Curing step

The curing step (b) of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm² is now explained.

The ink composition discharged on a recording medium is cured by irradiation with UV. This is due to a polymerization initiator contained in the ink composition of the present invention being decomposed by irradiation with UV to thus generate a polymerization-initiating species such as a radical, and the initiating species functioning so as to cause and promote a polymerization reaction of a polymerizable compound. In this process, if a sensitizer is present together with the polymerization initiator in the ink composition, the sensitizer in the system absorbs UV, attains an excited state, and contacts the polymerization initiator to thus promote decomposition of the polymerization initiator, thereby achieving a higher sensitivity curing reaction.

In the curing step, as a radiation source for UV, a light-emitting diode (UV-LED) that emits UV having an emission peak wavelength in the range of 300 to 400 nm is used.

As the UV-LED, for example, Nichia Corporation put on the market a violet LED for which the main emission spectrum has a wavelength between 365 nm and 420 nm. When a shorter wavelength is required, as an LED, an LED that can emit UV centered between 300 nm and 370 nm, disclosed by US. Pat. No. 6,084,250, can be cited as an example. Furthermore, other ultraviolet LEDs are also available, and irradiation may be carried out with a different UV bandwidth.

The emission peak wavelength of UV used in the present invention depends on sensitizer absorption characteristics, but is 300 to 400 nm. When it is less than 300 nm, the safety becomes poor. When it exceeds 400 nm, the curability becomes poor. From the viewpoint of curability, the UV emission peak wavelength is preferably 330 to 395 nm, and more preferably 350 to 390 nm.

Since the ink composition of the present invention has sufficient sensitivity, it is sufficiently cured even with low power actinic radiation. Specifically, it cures sufficiently when the maximum illumination intensity on a recording medium surface is in the range of 600 to 1,600 mW/cm². When the maximum illumination intensity on the recording medium surface is less than 600 mW/cm², the discharged ink composition does not cure, an image becomes tacky, and the image quality is degraded. Furthermore, when the maximum illumination intensity on the recording medium surface exceeds 1,600 mW/cm², curing of the discharged ink composition progresses too quickly, and degradation of the image quality is caused due to asperities being formed on the image surface.

From the viewpoints of image quality and productivity, the maximum illumination intensity on the recording medium surface is preferably 650 to 1,500 mW/cm², and more preferably 700 to 1,400 mW/cm².

It is desirable that the ink composition of the present invention is irradiated with such UV for preferably 0.01 to 2 sec., more preferably 0.1 to 1.5 sec., and yet more preferably 0.3 to 1 sec.

Actinic radiation irradiation conditions and a basic irradiation method are disclosed in JP-A-60-132767. Specifically, light sources are provided on both sides of a head unit equipped with a device for discharging an ink composition, and the head unit and light sources are made to scan by a so-called shuttle method.

In this way, in accordance with the use of a small-size and light-weight UV-LED as an actinic radiation source provided in the operating part, it is possible to achieve small size and low energy inkjet recording equipment, thus enabling an image to be formed with high productivity. Moreover, since a UV-LED has excellent versatility with regard to exposure conditions, suitable exposure conditions may be set according to the ink composition, and an image can be formed with high productivity.

Irradiation with actinic radiation is carried out after a certain time (e.g. preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing method above may also be applied to the inkjet recording method of the present invention.

In the curing step, energy applied by the light-emitting diode, that is, energy applied to the ink composition on the recording medium by irradiation with UV, is preferably 100 to 1,000 mJ/cm², more preferably 150 to 800 mJ/cm², and yet more preferably 200 to 700 mJ/cm². It is preferable for it to be in the above-mentioned numerical range since a balance can be achieved between productivity and curability.

In the inkjet recording method of the present invention, it is preferable to form at least part of an image in a printed material by repeating two or more times the image formation step (a) and the curing step (b) since an image having excellent surface gloss is obtained.

Examples of the mode in which at least part of an image in a printed material is formed by repeating two or more times the image formation step (a) and the curing step (b) include a mode in which a color image is formed by carrying out the steps (a) and (b) once per color, a mode in which a single color image is formed by repeating the steps (a) and (b) two or more times for the single color image, and a mode in which a color image is formed by repeating the steps (a) and (b) two or more times for one color of the color image to form a single color image and further repeating the steps (a) and (b) two or more times in the same manner for another color of the color image.

By employing such a inkjet recording method as described above, it is possible to maintain a uniform dot diameter for landed ink composition even for various types of recording medium having different surface wettability, thereby improving the image quality. In order to obtain a color image, it is preferable to superimpose colors in order from those with a low lightness. By superimposing ink compositions in order from one with low lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

The inkjet recording method of the present invention may suitably employ the ink set comprising at least one ink composition of the present invention. The order in which colored ink compositions are discharged is not particularly limited, but it is preferable to apply to a recording medium from a colored ink composition having a low lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black. In this way, the ink composition of the present invention may be cured by irradiation with UV in high sensitivity and form an image on the surface of the recording medium.

When using as an ink set comprising plurality of ink compositions having a different color, the ink set is not particularly limited as long as it is an ink set having two or more types of ink compositions in combination, the ink set comprising in combination at least one ink composition of the present invention and another ink composition of the present invention or an ink composition other than one of the present invention, and it is preferable for the ink set to comprise at least one ink composition of the present invention having a color selected from cyan, magenta, yellow, black, white, light magenta, and light cyan.

Furthermore, the ink set used in the present invention may be suitably used in the inkjet recording method of the present invention. In order to obtain a full color image using the ink composition of the present invention, it is preferable to use, as the ink set used in the present invention, an ink set comprising at least four dark ink compositions of yellow, cyan, magenta, and black, it is more preferable to use an ink set comprising in combination five dark ink compositions of yellow, cyan, magenta, black, and white and at least one ink composition of the present invention, and it is yet more preferable to use an ink set comprising in combination five dark ink compositions of yellow, cyan, magenta, black, and white and two, that is, light cyan, and light magenta ink compositions.

The 'dark ink composition' referred to in the present invention means an ink composition for which the content of the colorant exceeds 1 wt% of the entire ink composition. The colorant is not particularly limited; a known colorant may be used, and examples thereof include a pigment and a disperse dye.

The ink set used in the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

### EXAMPLES

The present invention is explained below more specifically by reference to Examples and Comparative Examples. However, the present invention should not be construed as being limited by these Examples. 'Parts' in the description below means 'parts by weight' and '%' means 'wt%' unless otherwise specified.

### Preparation of yellow mill base

| | |
|---|---|
| Yellow pigment: NOVOPERM YELLOW H2G (Clariant) 30 parts by weight SR9003 (propoxylated (2) neopentyl glycol diacrylate (compound obtained by diacrylating 2 mole propylene oxide adduct of neopentyl glycol), SARTOMER) | 30 parts by weight |
| BYK168 (dispersant, BYK Chemie) | 40 parts by weight |

The above components were stirred to give a yellow mill base. Preparation of a pigment mill base was carried out by placing them in an M50 disperser motor mill (Eiger Machinery, Inc.) and dispersing using zirconia beads having a diameter of 0.65 mm at a peripheral speed of 9 m/s for 8 hours.

### Preparation of magenta mill base

| | |
|---|---|
| Magenta pigment: CINQUASIA MAGENTA RT-355D (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a magenta mill base.

### Preparation of cyan mill base

| | |
|---|---|
| Cyan pigment: IRGALITE BLUE GLVO (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a cyan mill base.

### Preparation of black mill base

| | |
|---|---|
| Black pigment: SPECIAL BLACK 250 (Ciba Specialty Chemicals) | 30 parts by weight |
| SR9003 | 30 parts by weight |
| BYK168 | 40 parts by weight |

The above components were stirred under the same dispersion conditions as for preparation of the yellow mill base, thus giving a black mill base.

### Preparation of white mill base

| | |
|---|---|
| White pigment: alumina-treated titanium oxide (KRONOS) | 60 parts by weight |
| SR9003 | 36 parts by weight |
| Solsperse 36000 (Avecia) | 4 parts by weight |

The components above were stirred under the same dispersion conditions as in the preparation of the yellow mill base, thus giving a white mill base.

### Examples 1-1 to 1-19 and Comparative Examples 1-1 to 1-6

### <Method for preparing ink composition>

Each of the ink compositions was obtained by mixing and stirring the materials described in Table 1 and Table 2. The numerical values in the tables denote the amount (parts by weight) of each of the components added.

### Inkjet recording method

An ink composition was fired as droplets onto a sheet made of polyvinyl chloride and irradiated by transporting at a specific speed under a UV light-emitting diode (UV-LED) beam to thus cure the ink composition, thereby giving a printed material.

In the present Examples, discharge of the ink composition was carried out by inkjet recording equipment having a piezo type inkjet head (FUJIFILM Dimatix Q-class Sapphire). The light-emitting diode (UV-LED) for curing employed an NC4U134 manufactured by Nichia Corporation. The above LED outputs UV light having a wavelength of 365 nm from 1 chip, and the illumination intensity on the surface can be adjusted so as to be in the range of 50 to 2,000 mW/cm² by controlling the current level (focusing using lens). In the present Examples, exposure was carried out about 0.5 seconds after landing.

### Evaluation of curing sensitivity

Curing sensitivity was defined as the exposure energy at which tackiness of the surface after printing disappeared.

The illumination intensity was fixed at 1,000 mW/cm², and the exposure time (sec) was adjusted so as to give an exposure energy of 700 mJ/cm². The presence or absence of tackiness of the surface after printing was determined by pressing plain paper (Photocopy paper C2, manufactured by Fuji Xerox Co., Ltd.) thereagainst immediately after printing; tackiness was present when color transferred, and when there was no transfer of color tackiness was absent. The lower the value, the higher the sensitivity was evaluated as being, and evaluation was carried out using the criteria below.
Excellent: no transfer or tackiness.
Good: no transfer, and hardly any tackiness.
Fair: slight transfer and slight tackiness.
Poor: transferred and tacky.

### Evaluation of adhesion

As a method for evaluation of adhesion to a recording medium (polyvinyl chloride), a crosshatch test (JIS K 5600-5-6) was carried out. A solid image having an average film thickness of 12 µm for an image area was drawn in accordance with the above-mentioned inkjet recording method. The integrated exposure was 1,000 mJ/cm², and the illumination intensity was 800 mW/cm². Subsequently, each printed material was subjected to the crosshatch test. Evaluation was carried out by the six grades of 0 to 5 in accordance with JIS K 5600-5-6. An evaluation of grade 0 means that the cut edge was completely smooth and there was no peeling off in any lattice cell. The results of the crosshatch test were divided according to the criteria below and evaluated.
Excellent: JIS K5600-5-6 classification 0
Good: JIS K5600-5-6 classification 1,2
Fair: JIS K5600-5-6 classification 3,4
Poor: JIS K5600-5-6 classification 5

### Evaluation of discharge stability

After the ink composition obtained was stored at room temperature (25°C) for two weeks, recording on a recording medium was carried out using commercial inkjet recording equipment having a piezo type inkjet nozzle, and the presence or absence of dot dropouts and ink scattering was visually examined when printing was carried out continuously at normal temperature (25°C) for 3 hours and evaluated using the criteria below.
Excellent: no occurrence of dot dropouts or ink scattering
Good: 1 to 3 occurrences of dot dropouts or ink scattering
Fair: 4 to 10 occurrences of dot dropouts or ink scattering
Poor: 11 or more occurrences of dot dropouts or ink scattering

### Evaluation of flexibility

A cured film was prepared in the same manner as in the evaluation of curing sensitivity except that the integrated exposure was 1,000 mJ/cm², the illumination intensity was 800 mW/cm², and the recording medium was Fasson PE (Fasson polyethylene film: film thickness 100 µm). A cured film thus obtained was cut into an axial length of 5 cm x a width of 2.5 cm and stretched using a tensile tester (Shimadzu Corporation) at a speed of 30 cm/min, and the percentage elongation at which the cured film was broken was measured. A state in which an elongation twice the initial length was observed was defined as a percentage elongation of 100%.
Excellent: a percentage elongation of at least 100%
Good: a percentage elongation of at least 80% but less than 100%
Fair: a percentage elongation of at least 50% but less than 80%
Poor: a percentage elongation of at least 0% but less than 50%

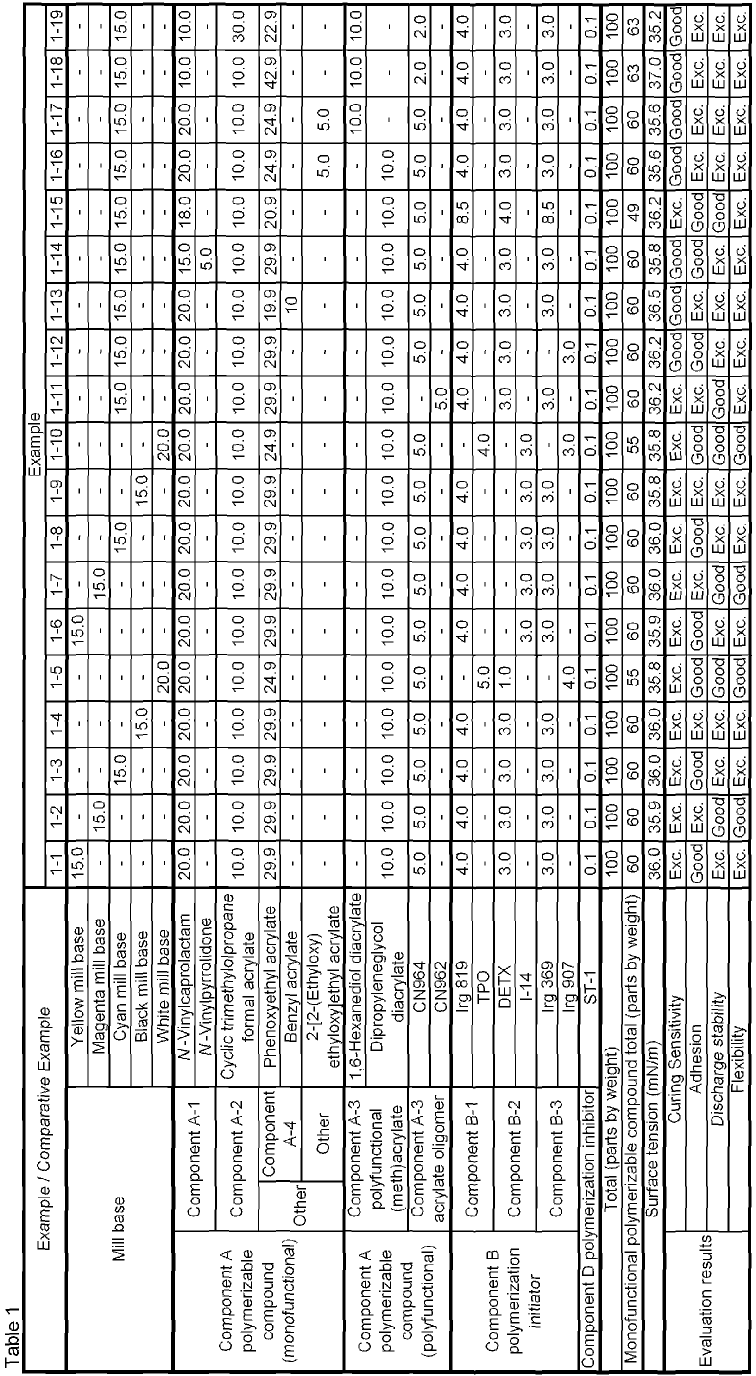

**Table 2**

| Example / Comparative Example | | | | Comparative Example | | | | | |
|---|---|---|---|---|---|---|---|---|---|
| | | | | 1-1 | 1-2 | 1-3 | 1-4 | 1-5 | 1-6 |
| Mill base | | | Yellow mill base | - | - | - | 15.0 | 15.0 | 15.0 |
| | | | Magenta mill base | - | - | - | - | - | - |
| | | | Cyan mill base | - | - | 15.0 | - | - | - |
| | | | Black mill base | 15.0 | 15.0 | - | - | - | - |
| | | | White mill base | - | - | - | - | - | - |
| Component A polymerizable compound (monofunctional) | Component A-1 | | *N*-Vinylcaprolactam | 30.0 | - | - | 20.0 | 20.0 | 10.0 |
| | | | *N*-Vinylpyrrolidone | - | - | - | - | - | - |
| | Component A-2 | | Cyclic trimethylopropane formal acrylate | - | - | 39.9 | 10.0 | 10.0 | 5.0 |
| | Other | Component A-4 | Phenoxyethyl acrylate | 29.9 | 39.9 | - | 29.9 | 29.9 | 9.9 |
| | | | Benzyl acrylate | - | - | - | - | - | - |
| | | Other | 2-[2-(Ethyloxy) ethyloxy]ethyl acrylate | - | - | - | - | - | - |
| Component A polymerizable compound (polyfunctional) | Component A-3 polyfunctional (meth)acrylate | | 1,6-Hexanediol diacrylate | - | 20.0 | 20.0 | - | - | - |
| | | | Dipropyleneglycol diacrylate | 10.0 | 10.0 | 10.0 | 10.0 | 10.0 | 55.0 |
| | Component A-3 acrylate oligomer | | CN964 | 5.0 | 5.0 | 5.0 | 5.0 | 5.0 | 5.0 |
| | | | CN962 | - | - | - | - | - | - |
| Component B polymerization initiator | Component B-1 | | Irg 819 | 4.0 | 4.0 | 4.0 | 2.0 | 2.0 | 2.0 |
| | | | TPO | - | - | - | - | - | - |
| | Component B-2 | | DETX | 3.0 | 3.0 | 3.0 | 6.0 | 6.0 | 6.0 |
| | | | I-14 | - | - | - | - | - | - |
| | Component B-3 | | Irg 369 | 3.0 | 3.0 | 3.0 | 2.0 | - | - |
| | | | Irg 907 | - | - | - | - | 2.0 | 2.0 |
| Component D polymerization inhibitor | | | ST-1 | 0.1 | 0.1 | 0.1 | 0.1 | 0.1 | 0.1 |
| Total (parts by weight) | | | | 100 | 100 | 100 | 100 | 100 | 110 |
| Monofunctional polymerizable compound total (parts by weight) | | | | 60 | 40 | 40 | 60 | 60 | 25 |
| Surface tension (mN/m) | | | | 36.8 | 36.2 | 34.5 | 36.4 | 36.5 | 34.8 |
| Evaluation results | Curing Sensitivity | | | Fair | Poor | Poor | Fair | Fair | Good |
| | Adhesion | | | Fair | Poor | Fair | Fair | Fair | Poor |
| | Discharge stability | | | Good | Fair | Fair | Fair | Fair | Poor |
| | Flexibility | | | Good | Good | Good | Good | Good | Poor |

Components described in Table 1 and Table 2 above were as follows.
CN964 (urethane acrylate oligomer, average functional group number 2, Sartomer Company Inc. Japan)
CN962 (urethane acrylate oligomer, average functional group number 2, Sartomer Company Inc. Japan)
Irg 369; 2-benzyl-2-dimethylamino-1-(4-morpholinophenyl)butan-1-one (IRGACURE 369, Ciba Japan)
Irg 907; 2-methyl-1-(4-methylthiophenyl)-2-morpholinopropan-1-one (IRGACURE 907, Ciba Japan)
Irg 819; bis(2,4,6-trimethylbenzoyl)phenylphosphine oxide (IRGACURE 819, Ciba Japan)
TPO; 2,4,6-trimethylbenzoyldiphenylphosphine oxide (Darocur TPO, Ciba Japan)
DETX; 2,4-diethylthioxanthone (KAYACURE DETX, Nippon Kayaku Co., Ltd.) 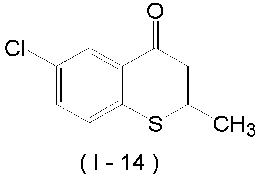
ST-1; FIRSTCURE ST-1 (polymerization inhibitor, Chem First)
Examples 2-1 to 2-21 and Comparative Examples 2-1 to 2-9

### <Method for preparing ink composition>

Each of the ink compositions was obtained by mixing and stirring the materials described in Table 3 and Table 4. The numerical values in the tables denote the amount (parts by weight) of each of the components added.

The evaluations were carried out in the same manner as in Example 1-1 using each ink composition thus obtained.

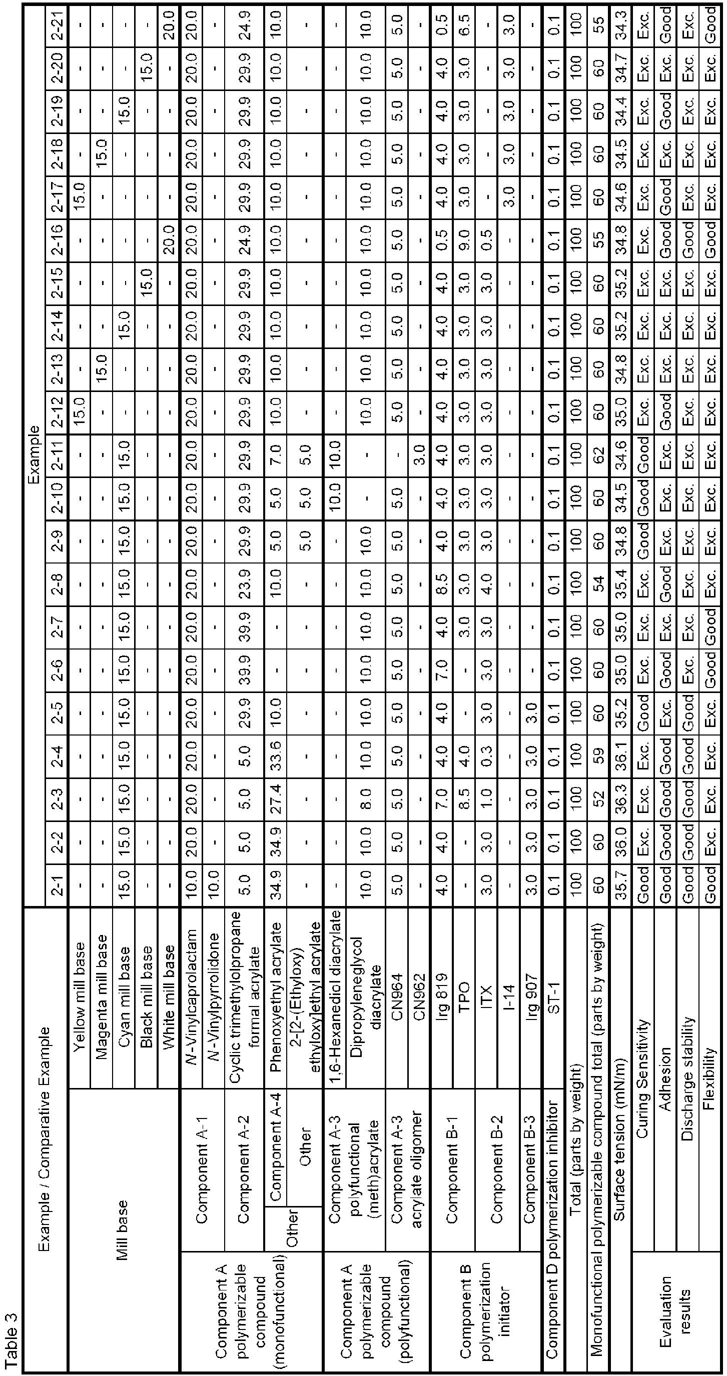

**Table 4**

| Example / Comparative Example | | | | Comparative Example | | | | | | | | |
|---|---|---|---|---|---|---|---|---|---|---|---|---|
| | | | | 2-1 | 2-2 | 2-3 | 2-4 | 2-5 | 2-6 | 2-7 | 2-8 | 2-9 |
| Mill base | | | Yellow mill base | 15.0 | - | - | - | - | - | - | - | - |
| | | | Maqenta mill base | - | 15.0 | - | - | - | - | - | - | - |
| | | | Cyan mill base | - | - | 15.0 | - | 15.0 | 15.0 | 15.0 | 15.0 | 15.0 |
| | | | Black mill base | - | - | - | 15.0 | - | - | - | - | - |
| | | | White mill base | - | - | - | - | - | - | - | - | - |
| Component A polymerizable compound (monofunctional) | Component A-1 | | *N*-Vinylcaprolactam | 30.0 | 30.0 | 30.0 | 30.0 | - | 10.0 | 20.0 | 20.0 | 20.0 |
| | | | *N*-Vinylpyrrolidone | - | - | - | - | - | - | - | - | - |
| | Component A-2 | | Cyclic trimethylopropane formal acrylate | - | - | - | - | 39.9 | 5.0 | 29.9 | 29.9 | 13.0 |
| | Other | Component A-4 | Phenoxyethyl acrylate | 3.0 | 3.0 | 3.0 | 3.0 | 3.0 | 9.9 | 10.0 | 10.0 | 29.9 |
| | | Other | 2-[2-(Ethyloxy) ethyloxy]ethyl acrylate | 29.9 | 29.9 | 29.9 | 29.9 | 20.0 | - | - | - | - |
| Component A polymerizable compound (polyfunctional) | Component A-3 polyfunctional (meth)acrylate | | 1,6-Hexanediol diacrylate | - | - | - | - | - | - | - | - | - |
| | | | Dipropyleneglycol diacrylate | 10.0 | 10.0 | 10.0 | 10.0 | 10.0 | 45.0 | 10.0 | 10.0 | 10.0 |
| | Component A-3 acrylate oligomer | | CN964 | 5.0 | 5.0 | 5.0 | 5.0 | 5.0 | 5.0 | 5.0 | 5.0 | 5.0 |
| | | | CN962 | - | - | - | - | - | - | - | - | - |
| Component B polymerization initiator | Component B-1 | | Irg 819 | 4.0 | 4.0 | 4.0 | 4.0 | 4.0 | 2.0 | 2.0 | 2.0 | 2.0 |
| | | | TPO | - | - | - | - | - | - | 1.0 | 1.0 | 1.0 |
| | Component B-2 | | ITX | 3.0 | 3.0 | 3.0 | 3.0 | 3.0 | 6.0 | 7.0 | - | - |
| | | | I-14 | - | - | - | - | - | - | - | 7.0 | - |
| | Component B-3 | | I rg 907 | - | - | - | - | - | 2.0 | - | - | 4.0 |
| Component D polymerization inhibitor | | | ST-1 | 0.1 | 0.1 | 0.1 | 0.1 | 0.1 | 0.1 | 0.1 | 0.1 | 0.1 |
| Total (parts by weight) | | | | 100 | 100 | 100 | 100 | 100 | 100 | 100 | 100 | 100 |
| Monofunctional polymerizable compound total (parts by weight) | | | | 63 | 63 | 63 | 63 | 63 | 25 | 60 | 60 | 63 |
| Surface tension (mN/m) | | | | 34.0 | 33.0 | 33.5 | 33.4 | 32.0 | 34.6 | 35.4 | 35.6 | 35.4 |
| Evaluation results | Curing Sensitivity | | | Poor | Poor | Poor | Poor | Poor | Good | Fair | Fair | Poor |
| | Adhesion | | | Poor | Fair | Fair | Poor | Poor | Poor | Poor | Poor | Fair |
| | Discharge stability | | | Poor | Poor | Poor | Poor | Poor | Poor | Fair | Fair | Fair |
| | Flexibility | | | Good | Good | Good | Good | Good | Poor | Good | Good | Good |

### Examples 3-1 to 3-6 and Comparative Examples 3-1 to 3-7

Exposure conditions (peak wavelength, light source, maximum illumination intensity, total exposure time, and integrated amount of light) were adjusted as in Examples 3-1 to 3-6 and Comparative Examples 3-1 to 3-7 of Table 5, and the image quality and productivity were evaluated using the ink compositions prepared in Examples 1-1, 1-4, and 1-7 and Comparative Examples 1-3.

### Evaluation of image quality

A solid image having an average film thickness of 4 µm was printed in accordance with the above-mentioned inkjet recording method, and evaluation was made in micro and macro terms for the image surface after irradiation with UV. Micro evaluation was carried out by the presence or absence of asperities on the image surface by electron microscope observation. Macro evaluation was carried out for the degree of definition of the image quality by eye. From the above, the image quality was evaluated using the criteria below.
Excellent: the image was free from asperities and spreading, had a smooth image surface, and had definition.
Good: the image had asperities and spreading but maintained definition.
Fair: the image had asperities and spreading and lacked definition.
Poor: the image had a lot of asperities and spreading and lacked definition.

### Evaluation of productivity

Defined as total exposure time when the integrated amount of light was 500 mJ/cm².
Excellent: no greater than 0.3 sec.
Good: 0.3 to 1 sec.
Poor: at least 1 sec.

**Table 5**

| Example Comparative Example | Exposure conditions | | | | Evaluation results | | | | |
|---|---|---|---|---|---|---|---|---|---|
| | Peak wavelength light source | Maximum illumination intensity (mW/cm²) | Total exposure time (sec) | Integrated amount of light (mJ/cm²) | Ink composition | Example | | | Comparative Example |
| | | | | | | 1-1 | 1-4 | 1-7 | 1-3 |
| Example 3-1 | 365nm LED | 1,000 | 0.5 | 500 | Image quality | Exc. | Exc. | Good | Fair |
| | | | | | Productivity | Good | Good | Good | Good* |
| Example 3-2 | | 1,400 | 0.36 | 500 | Image quality | Exc. | Exc. | Good | Fair |
| | | | | | Productivity | Good | Good | Good | Good* |
| Example 3-3 | | 600 | 0.83 | 500 | Image quality | Exc. | Good | Good | Fair |
| | | | | | Productivity | Good | Good | Good | Good* |
| Comparative Example 3-1 | 365nm LED | 50 | 10 | 500 | Image quality | Fair | Poor | Poor | Poor |
| | | | | | Productivity | Poor | Poor | Poor | Poor |
| Comparative Example 3-2 | | 2,000 | 0.25 | 500 | Image quality | Fair | Fair | Fair | Poor |
| | | | | | Productivity | Exc. | Exc. | Exc. | Exc. |
| Example 3-4 | 385nm LED | 1,000 | 0.5 | 500 | Image quality | Exc. | Exc. | Good | Fair |
| | | | | | Productivity | Good | Good | Good | Good* |
| Example 3-5 | | 1,400 | 0.36 | 500 | Image quality | Exc. | Exc. | Good | Fair |
| | | | | | Productivity | Good | Good | Good | Good* |
| Example 3-6 | | 600 | 0.83 | 500 | Image quality | Exc. | Good | Good | Fair |
| | | | | | Productivity | Good | Good | Good | Good* |
| Comparative Example 3-3 | 385nm LED | 50 | 10 | 500 | Image quality | Fair | Poor | Poor | Poor |
| | | | | | Productivity | Poor | Poor | Poor | Poor |
| Comparative Example 3-4 | | 2,000 | 0.25 | 500 | Image quality | Fair | Fair | Fair | Poor |
| | | | | | Productivity | Exc. | Exc. | Exc. | Exc. |
| Comparative Example 3-5 | 420nm LED | 800 | 0.63 | 500 | Image quality | Fair | Fair | Fair | Fair |
| | | | | | Productivity | Good* | Good* | Good* | Good* |
| Comparative Example 3-6 | | 50 | 10 | 500 | Image quality | Fair | Poor | Poor | Poor |
| | | | | | Productivity | Poor | Poor | Poor | Poor |
| Comparative Example 3-7 | | 2,000 | 0.25 | 500 | Image quality | Fair | Fair | Fair | Poor |
| | | | | | Productivity | Exc. | Exc. | Exc. | Exc. |

| | | | | | | | | | |
|---|---|---|---|---|---|---|---|---|---|
| Good* ink partially uncured | | | | | | | | | |

### Examples 4-1 to 4-6 and Comparative Examples 4-1 to 4-7

The exposure conditions (peak wavelength, light source, maximum illumination intensity, total exposure time, and integrated amount of light) were adjusted as in Examples 4-1 to 4-6 and Comparative Examples 4-1 to 4-7 of Table 6, and the image quality and productivity were evaluated as in Example 3-1 using the ink compositions prepared in Examples 2-12, 2-13, and 2-17 and Comparative Examples 2-3, 2-5, and 2-9.

**Table 6**

| Example Comparative Example | Exposure conditions | | | | Evaluation results | | | | | | |
|---|---|---|---|---|---|---|---|---|---|---|---|
| | Peak wavelength light source | Maximum illumination intensity (mW/cm²) | Total exposure time (sec) | Integrated amount of light (mJ/cm²) | Ink composition | Example | | | Comparative Example | | |
| | | | | | | 2-12 | 2-13 | 2-17 | 2-3 | 2-5 | 2-9 |
| Example 4-1 | 365nm LED | 1,000 | 0.5 | 500 | Image quality | Exc. | Exc. | Good | Fair | Fair | Fair |
| | | | | | Productivity | Good | Good | Good | Good* | Good* | Good* |
| Example 4-2 | | 1,400 | 0.36 | 500 | Image quality | Exc. | Exc. | Good | Fair | Fair | Fair |
| | | | | | Productivity | Good | Good | Good | Good* | Good* | Good* |
| Example 4-3 | | 600 | 0.83 | 500 | Image quality | Exc. | Good | Good | Fair | Fair | Fair |
| | | | | | Productivity | Good | Good | Good | Good* | Good* | Good* |
| Comparative Example 4-1 | 365nm LED | 50 | 10 | 500 | Image quality | Fair | Poor | Poor | Poor | Poor | Poor |
| | | | | | Productivity | Poor | Poor | Poor | Poor | Poor | Poor |
| Comparative Example 4-2 | | 2,000 | 0.25 | 500 | Image quality | Fair | Fair | Fair | Poor | Poor | Poor |
| | | | | | Productivity | Exc. | Exc. | Exc. | Exc. | Exc. | Exc. |
| Example 4-4 | 385nm LED | 1,000 | 0.5 | 500 | Image quality | Exc. | Exc. | Good | Fair | Fair | Fair |
| | | | | | Productivity | Good | Good | Good | Good* | Good* | Good* |
| Example 4-5 | | 1,400 | 0.36 | 500 | Image quality | Exc. | Exc. | Good | Fair | Fair | Fair |
| | | | | | Productivity | Good | Good | Good | Good* | Good* | Good* |
| Example 4-6 | | 600 | 0.83 | 500 | Image quality | Exc. | Good | Good | Fair | Fair | Fair |
| | | | | | Productivity | Good | Good | Good | Good* | Good* | Good* |
| Comparative Example 4-3 | 385nm LED | 50 | 10 | 500 | Image quality | Fair | Poor | Poor | Poor | Poor | Poor |
| | | | | | Productivity | Poor | Poor | Poor | Poor | Poor | Poor |
| Comparative Example 4-4 | | 2,000 | 0.25 | 500 | Image quality | Fair | Fair | Fair | Poor | Poor | Poor |
| | | | | | Productivity | Exc. | Exc. | Exc. | Exc. | Exc. | Exc. |
| Comparative Example 4-5 | 420nm LED | 800 | 0.63 | 500 | Image quality | Good | Good | Fair | Fair | Fair | Fair |
| | | | | | Productivity | Fair | Fair | Fair | Fair | Fair | Fair |
| Comparative Example 4-6 | | 50 | 10 | 500 | Image quality | Fair | Poor | Poor | Poor | Poor | Poor |
| | | | | | Productivity | Poor | Poor | Poor | Poor | Poor | Poor |
| Comparative Example 4-7 | | 2,000 | 0.25 | 500 | Image quality | Fair | Fair | Fair | Poor | Poor | Poor |
| | | | | | Productivity | Exc. | Exc. | Exc. | Exc. | Exc. | Exc. |

| | | | | | | | | | | | |
|---|---|---|---|---|---|---|---|---|---|---|---|
| Good* ink partially uncured | | | | | | | | | | | |

## Claims

1. An inkjet recording method comprising:
an image formation step of forming an image on a recording medium by discharging an ink composition comprising (Component A) and (Component B)
(Component A) a polymerizable composition comprising Component A-1 to Component A-3
(Component A-1) an *N*-vinyllactam,
(Component A-2) a compound represented by Formula (a-2) 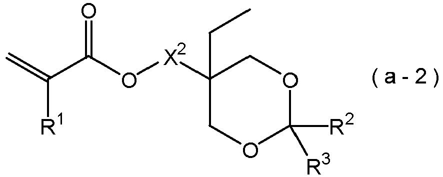 wherein in Formula (a-2), R¹, R², and R³ independently denote a hydrogen atom, a methyl group, or an ethyl group, and X² denotes a single bond or a divalent linking group,
(Component A-3) a polyfunctional (meth)acrylate,
the total content of monofunctional polymerizable compounds comprising Component A-1 and Component A-2 being at least 40 wt% in the ink composition,
(Component B) a polymerization initiator comprising Component B-1 and Component B-2
(Component B-1) an acylphosphine compound,
(Component B-2) a thioxanthone compound and/or a thiochromanone compound,
wherein Component B-1 comprises a bisacylphosphine compound and a monoacylphosphine oxide compound,
{(Component B-1 total weight) ≥ (Component B-2 total weight)} being satisfied; and
a curing step of curing the discharged ink composition by irradiating with UV using a light-emitting diode that emits UV having an emission peak wavelength in the range of 300 to 400 nm so that the maximum illumination intensity on the recording medium surface is 600 to 1,600 mW/cm².

2. The inkjet recording method according to Claim 1, wherein Component A-1 is a compound represented by Formula (a-1) 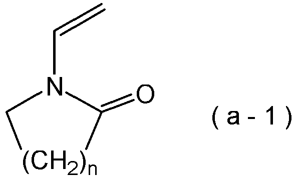 wherein in Formula (a-1), n denotes an integer of 1 to 5.

3. The inkjet recording method according to Claim 1 or 2, wherein Component A-1 is *N*-vinylcaprolactam.

4. The inkjet recording method according to any one of Claims 1 to 3, wherein the divalent linking group denoted by X² in Formula (a-2) is a divalent hydrocarbon group, poly(alkyleneoxy) group, or poly(alkyleneoxy)alkyl group.

5. The inkjet recording method according to any one of Claims 1 to 4, wherein the Component B content is 1 to 20 wt% in the ink composition, Component B-1 being 0.1 to 16 wt% and Component B-2 being 0.1 to 10 wt%.

6. The inkjet recording method according to any one of Claims 1 to 5, wherein the relationship {(Component B-1 total weight):(Component B-2 total weight)} = 20:1 to 1:1 is satisfied.

7. The inkjet recording method according to any one of Claims 1 to 6, wherein the Component A-3 content is 5 to 59 wt% in the ink composition.

8. The inkjet recording method according to any one of Claims 1 to 7, wherein the ink composition comprises (Component A-4) an aromatic hydrocarbon group-containing monofunctional (meth)acrylate.

9. The inkjet recording method according to Claim 8, wherein Component A-4 is a compound represented by Formula (a-4) 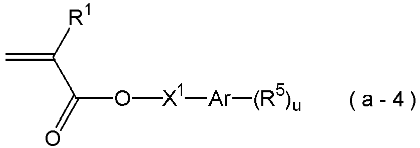 wherein:
R¹ denotes a hydrogen atom or a methyl group,
X¹ denotes a divalent linking group,
Ar denotes an aromatic hydrocarbon group,
R⁵ denotes a substituent,
u denotes an integer of 0 to 5, and
the u R⁵s may be identical to or different from each other.

10. The inkjet recording method according to any one of Claims 1 to 4, wherein the emission peak wavelength is 350 to 390 nm.

11. The inkjet recording method according to any one of Claims 1 to 10, wherein the ink composition comprises (Component C) a colorant.

12. The inkjet recording method according to Claim 11, wherein Component C is a pigment or an oil-based dye.

13. A printed material recorded by the inkjet recording method according to any one of Claims 1 to 12.

## Patentansprüche

1. Tintenstrahl-Aufzeichnungsverfahren aufweisend:
einen Abbildungs-Erzeugungsschritt des Erzeugens eines Abbilds auf einem Aufzeichnungsmedium durch Ausstoßen einer Tintenzusammensetzung, die (Komponente A) und (Komponente B) aufweist,
wobei (Komponente A) eine polymerisierbare Zusammensetzung ist, die Komponente A-1 bis Komponente A-3 aufweist, wobei
(Komponente A-1) ein N-Vinyleactam ist,
(Komponente A-2) eine Verbindung ist, die repräsentiert wird durch Formel (a-2) 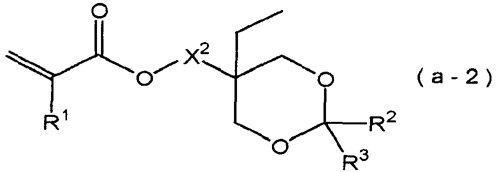 wobei in Formel (a-2), R¹, R² und R³ unabhängig ein Wasserstoffatom, eine Methylgruppe oder eine Ethylgruppe bezeichnen, und X² eine Einfachbindung oder eine zweiwertige Verbindungsgruppe bezeichnet,
(Komponente A-3) ein polyfunktionelles (Meth)acrylat ist,
wobei der Gesamtgehalt an monofunktionellen polymerisierbaren Verbindungen, die Komponente A-1 und Komponente A-2 aufweisen, mindestens 40 Gew.% in der Tintenzusammensetzung ist,
wobei (Komponente B) ein Polymerisationsinitiator ist, der Komponente B-1 und
Komponente B-2 aufweist, wobei
(Komponente B-1) eine Acylphosphin-Verbindung ist,
(Komponente B-2) eine Thioxanthon-Verbindung und/oder eine Thiochromanon-Verbindung ist,
wobei Komponente B-1 eine Bisacylphosphin-Verbindung und eine Monoacylphosphinoxid-Verbindung aufweist,
wobei erfüllt ist, dass {(Gesamtgewicht an Komponente B-1) ≥ (Gesamtgewicht an Komponente B-2)}; und
einen Härtungsschritt des Härtens der ausgestoßenen Tintenzusammensetzung durch Bestrahlen mit UV unter Verwendung einer Lichtemittierenden Diode, die UV mit einer Emissionspeak-Wellenlänge in dem Bereich von 300 bis 400 nm emittiert, so dass die maximale Beleuchtungsstärke an der Oberfläche des Aufzeichnungsmediums 600 bis 1600 mW/cm² beträgt.

2. Tintenstrahl-Aufzeichnungsverfahren nach Anspruch 1, wobei Komponente A-1 eine Verbindung ist, die durch Formel (a-1) repräsentiert wird 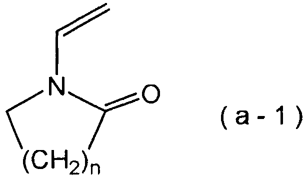 wobei in Formel (a-1) n eine ganze Zahl von 1 bis 5 bezeichnet.

3. Tintenstrahl-Aufzeichnungsverfahren nach Anspruch 1 oder 2, wobei Komponente A-1 N-Vinylcaprolactam ist.

4. Tintenstrahl-Aufzeichnungsverfahren nach einem der Ansprüche 1 bis 3, wobei die zweiwertige Verbindungsgruppe, die in Formel (a-2) mit X² bezeichnet ist, eine zweiwertige Kohlenwasserstoffgruppe, Poly(alkylenoxy)-Gruppe oder Poly(alkylenoxy)alkyl-Gruppe ist.

5. Tintenstrahl-Aufzeichnungsverfahren nach einem der Ansprüche 1 bis 4, wobei der Gehalt an Komponente B 1 bis 20 Gew.-% in der Tintenzusammensetzung beträgt, wobei Komponente B-1 0,1 bis 16 Gew.-% ausmacht und Komponente B-2 0,1 bis 10 Gew.-% ausmacht.

6. Tintenstrahl-Aufzeichnungsverfahren nach einem der Ansprüche 1 bis 5, wobei die Beziehung {(Gesamtgewicht an Komponente B-1): (Gesamtgewicht an Komponente B-2)} = 20:1 bis 1:1 erfüllt ist.

7. Tintenstrahl-Aufzeichnungsverfahren nach einem der Ansprüche 1 bis 6, wobei der Gehalt an Komponente A-3 5 bis 59 Gew.-% in der Tintenzusammensetzung beträgt.

8. Tintenstrahl-Aufzeichnungsverfahren nach einem der Ansprüche 1 bis 7, wobei die Tintenzusammensetzung (Komponente A-4) aufweist, ein monofunktionelles (Meth)acrylat, das eine aromatische Kohlenwasserstoffgruppe enthält.

9. Tintenstrahl-Aufzeichnungsverfahren nach Anspruch 8, wobei Komponente A-4 eine Verbindung ist, die repräsentiert wird durch Formel (a-4) 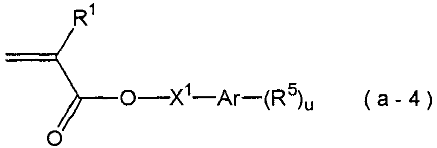 wobei:
R¹ ein Wasserstoffatom oder eine Methylgruppe bezeichnet,
X¹ eine zweiwertige Verbindungsgruppe bezeichnet,
Ar eine aromatische Kohlenwasserstoffgruppe bezeichnet,
R⁵ einen Substituenten bezeichnet,
u eine ganze Zahl von 0 bis 5 bezeichnet, und
die u R⁵s gleich oder voneinander verschieden sein können.

10. Tintenstrahl-Aufzeichnungsverfahren nach einem der Ansprüche 1 bis 4, wobei die Emissionspeak-Wellenlänge 350 - 390 nm beträgt.

11. Tintenstrahl-Aufzeichnungsverfahren nach einem der Ansprüche 1 bis 10, wobei die Tintenzusammensetzung (Komponente C), ein Farbmittel, aufweist.

12. Tintenstrahl-Aufzeichnungsverfahren nach Anspruch 11, wobei Komponente C ein Pigment oder ein Farbstoff auf Ölbasis ist.

13. Druckerzeugnis, bei dem mittels des Tintenstrahl-Aufzeichnungsverfahrens nach einem der Ansprüche 1 bis 12 aufgezeichnet wurde.

## Revendications

1. Procédé d'enregistrement par jet d'encre, comprenant :
une étape de formation d'image destinée à former une image sur un support d'enregistrement en déchargeant une composition d'encre comprenant (composant A) et (composant B) ;
(composant A) une composition polymérisable comprenant le composant A-1 au composant A-3 ;
(composant A-1) un N-vinyl-lactame ;
(composant A-2) un composé représenté par la formule (a-2), 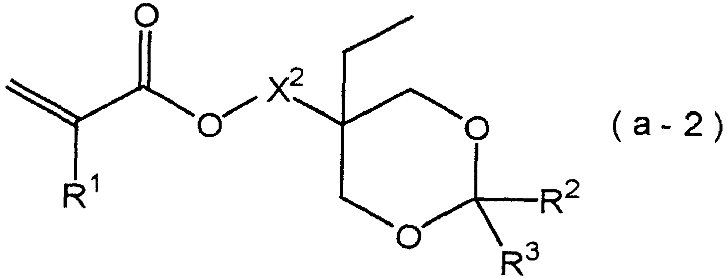 dans lequel dans la formule (a-2), R¹, R² et R³ indiquent indépendamment un atome d'hydrogène, un groupe méthyle, ou un groupe éthyle, et X² indique une liaison simple ou un groupe de liaison divalent ;
(composant A-3) un (méth)acrylate polyfonctionnel ;
la teneur totale des composés polymérisables monofonctionnels comprenant le composant A-1 et le composant A-2 étant égale à au moins 40 % en poids dans la composition d'encre ;
(composant B) un initiateur de polymérisation comprenant le composant B-1 et le composant B-2 ;
(composant B-1) un composé acylphosphine ;
(composant B-2) un composé thioxanthone et/ou un composé thiochromanone ;
dans lequel le composant B-1 comprend un composé bisacylphosphine et un composé d'oxyde de monoacylphosphine,
la relation {(poids total du composant B-1) ≥ (poids total du composant B-2)} étant satisfaite, et
une étape de durcissement destinée à durcir la composition d'encre déchargée par une irradiation aux UV à l'aide d'une diode électroluminescente qui émet des UV présentant une longueur d'onde de pic d'émission comprise dans l'intervalle de 300 à 400 nm, de sorte que l'intensité d'éclairement maximale sur la surface de support d'enregistrement est comprise entre 600 et 1600 mW/cm².

2. Procédé d'enregistrement par jet d'encre selon la revendication 1, dans lequel le composant A-1 est un composé représenté par la formule (a-1) 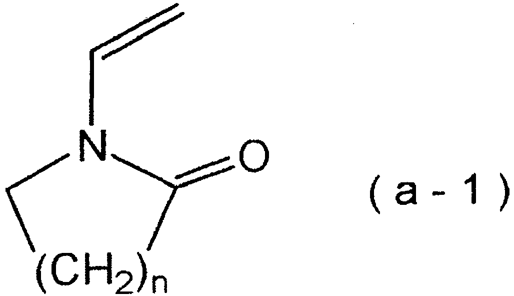 dans lequel, dans la formule (a-1), n indique un entier de 1 à 5.

3. Procédé d'enregistrement par jet d'encre selon la revendication 1 ou 2, dans lequel le composant A-1 est un N-vinyl-lactame.

4. Procédé d'enregistrement par jet d'encre selon l'une quelconque des revendications 1 à 3, dans lequel le groupe de liaison divalent indiqué par X² dans la formule (a-2) est un groupe hydrocarbure divalent, un groupe poly(alkylèneoxy) ou un groupe poly(alkylèneoxy)alkyle.

5. Procédé d'enregistrement par jet d'encre selon l'une quelconque des revendications 1 à 4, dans lequel la teneur en composant B est égale à 1 à 20 % en poids dans la composition d'encre, le composant B-1 étant égal à 0,1 à 16 % en poids et le composant B-2 étant égal à 0,1 à 10 % en poids.

6. Procédé d'enregistrement par jet d'encre selon l'une quelconque des revendications 1 à 5, dans lequel la relation{(poids total du composant B-1) : (poids total du composant B-2)} = 20 : 1 à 1 : 1 est satisfaite.

7. Procédé d'enregistrement par jet d'encre selon l'une quelconque des revendications 1 à 6, dans lequel la teneur en composant A-3 est égale à 5 à 59 % en poids dans la composition d'encre.

8. Procédé d'enregistrement par jet d'encre selon l'une quelconque des revendications 1 à 7, dans lequel la composition d'encre comprend (composant A-4) un (méth)acrylate monofonctionnel contenant un groupe hydrocarbure aromatique.

9. Procédé d'enregistrement par jet d'encre selon la revendication 8, dans lequel le composant A-4 est un composé représenté par la formule (a-4) : 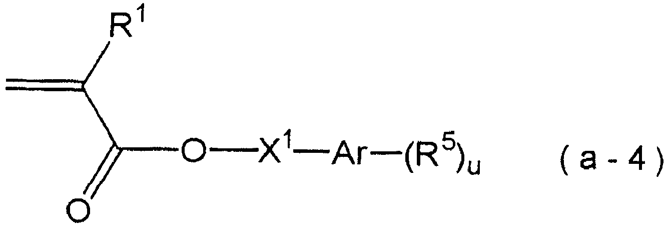 où
R¹ indique un atome d'hydrogène ou un groupe méthyle ;
X¹ indique un groupe de liaison divalent ;
Ar indique un groupe hydrocarbure aromatique ;
R⁵ indique un substituant ;
u indique un entier de 0 à 5, et
les u R⁵ peuvent être identiques ou différents les uns des autres.

10. Procédé d'enregistrement par jet d'encre selon l'une quelconque des revendications 1 à 4, dans lequel la longueur d'onde de pic d'émission est comprise dans l'intervalle de 350 à 390 nm.

11. Procédé d'enregistrement par jet d'encre selon l'une quelconque des revendications 1 à 10, dans lequel la composition d'encre comprend (composant C) un colorant.

12. Procédé d'enregistrement par jet d'encre selon la revendication 11, dans lequel le composant C est un pigment ou une teinture à base d'huile.

13. Matériau imprimé enregistré par le procédé d'enregistrement par jet d'encre selon l'une quelconque des revendications 1 à 12.
